# EUROPEAN PATENT APPLICATION

(11) **EP 4 342 457 A1**
(43) Date of publication of application: **27.03.2024**
(21) Application number: 23750521.9
(22) Date of filing: 08.08.2023
(51) Int. Cl.: A61K 9/06, A61K 47/02, A61P 29/00, A61P 17/02, A61L 27/52, A61L 27/02

(54) **ELECTRONIC DEVICE, METHOD, AND RECORDING MEDIUM FOR DISPLAYING LIST FOR CHANGING APPLICATION ON BASIS OF SIZE OF DISPLAY REGION OF DISPLAY**

(30) Priority: 08.08.2022 KR 20220098856; 26.08.2022 KR 20220107969
(71) Applicant: Samsung Electronics Co., Ltd., Suwon-si, Gyeonggi-do 16677 (KR)
(72) Inventor: PARK, Junkyu, Gyeongggi-do 16677 (KR); KIM, Changdo, Gyeonggi-do 16677 (KR); KIM, Shangheon, Gyeonggi-do 16677 (KR); SEO, Youngseung, Gyeonggi-do 16677 (KR); LEE, Dongjun, Gyeonggi-do 16677 (KR); JEONG, Hyesoon, Gyeonggi-do 16677 (KR); LIM, Yeunwook, Gyeonggi-do 16677 (KR)
(74) Representative: Gulde & Partner
(86) International application number: PCT/KR2023/011667
(87) International publication number: WO 2024/035069

(57) **Abstract**

An electronic device displays a home screen including a main area for displaying icons and/or widgets and an icon tray area for displaying first icons corresponding to designated applications. The icon tray area is displayed between the main area. The navigation bar is displayed at a bottom area of the touch display. The navigation bar includes one or more visual objects including a home button. The electronic device displays, in response to a touch input corresponding to one of the icons displayed on the home screen, an execution screen of a software application corresponding to the touch input. The electronic device displays, in response to changing from displaying of the home screen to displaying the execution screen of the software application, in the bottom area of the touch display together with the navigation bar, second icons corresponding to the designated applications. The size of each of the second icons is smaller than a size of each of the first icons.

## Description

### [Technical Field]

The present disclosure relates to an electronic device, a method, and a recording medium for displaying a list for switching of an application based on a size of a display area of a display.

### [Background Art]

An electronic device having a deformable form factor is being developed by using a flexible display. For example, the electronic device including a plurality of foldable housings may provide a user experience based on the form of the electronic device to the user by using the flexible display disposed across the plurality of housings. For example, based on the form of the flexible display that is folded or unfolded by the user's external force, the electronic device may change the content displayed on the flexible display. For another example, the electronic device that rolls or unfolds the flexible display is being developed.

### [Disclosure]

### [Technical Solution]

According to an embodiment, an electronic device may comprise a touch display, a processor and a memory for storing instructions. The instructions may be configured to, when executed by the processor, cause the electronic device to display a home screen including a main area for displaying icons and/or widgets and an icon tray area for displaying first icons corresponding to designated applications. The icon tray area may be displayed between the main area. The navigation bar may be displayed at a bottom area of the touch display. The navigation bar may include one or more visual objects including a home button. The instructions may be configured to, when executed by the processor, cause the electronic device to display, in response to a touch input corresponding to one of the icons displayed on the home screen, an execution screen of a software application corresponding to the touch input. The instructions may be configured to, when executed by the processor, cause the electronic device to display, in response to changing from displaying of the home screen to displaying the execution screen of the software application, in the bottom area of the touch display together with the navigation bar, second icons corresponding to the designated applications. The size of each of the second icons may be smaller than a size of each of the first icons.

According to an embodiment, a method of an electronic device including a touch display may comprise displaying a home screen including a main area for displaying icons and/or widgets and an icon tray area for displaying first icons corresponding to designated applications. The icon tray area may be displayed between the main area and a navigation bar displayed at a bottom area of the touch display. The navigation bar may include one or more visual objects including a home button. The method may comprise displaying, in response to a touch input corresponding to one of the icons displayed on the home screen, an execution screen of a software application corresponding to the touch input. The method may comprise displaying, in response to changing from displaying of the home screen to displaying the execution screen of the software application, in the bottom area of the touch display together with the navigation bar, second icons corresponding to the designated applications. A size of each of the second icons may be smaller than a size of each of the first icons.

According to an embodiment, an electronic device, may comprise a first housing including a first surface and a second surface faced away from the first surface, a second housing including a third surface and a fourth surface faced away from the third surface, a folding housing pivotably connecting a side surface of the first housing and a side surface of the second housing facing the side surface of the first housing by a folding axis, a flexible display disposed on the first surface and the third surface across the folding housing, a cover display disposed on the second surface of the first housing, and a processor. The processor may be configured to display, in a first state displaying a screen based on execution of a first application in a first area of a displaying area of the flexible display, a list of applications for selecting at least one application executed based on the first area, wherein the list is displayed in a second area different from the first area. The processor may be configured to display, in a second state executing the first application based on a displaying area of the cover display, a screen based on execution of the first application in the displaying area of the cover display independent from displaying the list of the applications. According to an embodiment, the electronic device may divide the display into the first area that displays a screen based on the execution of a specific application, and the second area displaying a list of one or more applications, and may control the screen displayed in the first area based on an input related to the second area.

According to an embodiment, a method of an electronic device, may comprise displaying, in a first state displaying a screen based on execution of a first application in a first area of a displaying area of a flexible display of the electronic device, a list of applications for selecting at least one application executed based on the first area, wherein the list is displayed in a second area different from the first area. The method may comprise displaying, in a second state executing the first application based on a displaying area of a cover display, wherein a size of a displaying area of the cover display is smaller than a size of the displaying area of the flexible display, and is different from the flexible display, a screen based on execution of the first application in the displaying area of the cover display independent from displaying the list of the applications.

According to an embodiment, an electronic device, may comprise a first housing including a first surface and a second surface faced away from the first surface, a second housing including a third surface and a fourth surface faced away from the third surface, a folding housing pivotably connecting a side surface of the first housing and a side surface of the second housing facing the side surface of the first housing by a folding axis, a flexible display disposed on the first surface and the third surface across the folding housing, and a processor. The processor may be configured to display, in a first area of a displaying area of the flexible display, a first screen based on a first application executed by a processor. The processor may be configured to display, in a second area different from the first area including a first portion of the flexible display bent by the folding housing, a list of applications executable based on the first area. The processor may be configured to receive, based on a gesture performed in a second portion of the flexible display which is different from the first portion and display the second area, an input indicating selecting at least one second application different from the first application in the list of the applications. The processor may be configured to display, with the first screen in the first area, based on layout indicated by the input, at least one second screen based on execution of the at least one second application.

According to an embodiment, a method of an electronic device, may comprise displaying, in a first area of a displaying area of a flexible display of the electronic device, a first screen based on a first application executed by a processor of the electronic device. The method may comprise displaying, in a second area different from the first area including a first portion of the flexible display bent by a folding housing of the electronic device, a list of applications executable based on the first area. The method may comprise receiving, based on a gesture performed in a second portion of the flexible display which is different from the first portion and display the second area, an input indicating selecting at least one second application different from the first application in the list of the applications. The method may comprise displaying, with the first screen in the first area, based on layout indicated by the input, at least one second screen based on execution of the at least one second application.

According to an embodiment, an electronic device may comprise a first housing including a first surface and a second surface faced away from the first surface. The electronic device may comprise a second housing including a third surface and a fourth surface faced away from the third surface. The electronic device may comprise a folding housing pivotably connecting a side surface of the first housing and a side surface of the second housing facing the side surface of the first housing by a folding axis. The electronic device may comprise a first display disposed on the first surface and the third surface across the folding housing. The electronic device may comprise a second display disposed on the second surface of the first housing. The electronic device may comprise a processor. The processor may be configured to control, in a state where the first display is occluded by the first housing and the second housing, the second display based on execution of the application. The processor may be configured to refrain from controlling, in response to an input indicating switching the state of the first display to another state different from the state, based on rotation of the folding axis in the state, the second display, and activate the first display. The processor may be configured to control, based on execution of the application, a first area of a displaying area of the activated first display. The processor may be configured to display, in a second area different from the first area based on a type of the application, one or more executable objects for independently controlling the first area from the application.

### [Description of the Drawings]

FIG. 1 is a block diagram of an electronic device in a network environment according to various embodiments.
FIG. 2 is a diagram illustrating an unfolded state of an electronic device according to various embodiments of the present disclosure.
FIG. 3 is a diagram illustrating a folded state of an electronic device according to various embodiments of the present disclosure.
FIG. 4 is a perspective view illustrating an example of a completely unfolded state or a partially unfolded intermediate state of an electronic device according to various embodiments of the present disclosure.
FIGS. 5A, 5B and 5C illustrate an example of screens displayed by an electronic device based on different states, according to an embodiment.
FIGS. 6A to 6B illustrate an example of an operation in which an electronic device displays a screen based on execution of an application and a list of one or more applications on each of different areas of a display area, according to an embodiment.
FIGS. 7A to 7B illustrate an example of a list of applications displayed by an electronic device in a second area of a display area, according to an embodiment.
FIGS. 8A to 8B illustrate an example of a screen displayed by an electronic device based on a form of a flexible display, according to an embodiment.
FIGS. 9A to 9B illustrate an example of an operation performed by an electronic device based on an input received through a second area of a display area, according to an embodiment.
FIGS. 10A to 10B illustrate an example of an operation in which an electronic device adjusts an arrangement of screens corresponding to each of a plurality of applications based on a form of a flexible display, according to an embodiment.
FIG. 11 illustrates an example of an operation in which an electronic device adjusts an arrangement of screens corresponding to each of a plurality of applications based on an input received through a second area of a display area, according to an embodiment.
FIG. 12 illustrates an example of an operation performed by an electronic device based on a location of a grip on a housing of the electronic device, according to an embodiment.
FIG. 13 illustrates an example of an operation performed by an electronic device based on a display area that is enlarged and/or reduced by deformation of a flexible display, according to an embodiment.
FIG. 14 illustrates an example of an operation of an electronic device according to an embodiment.
FIG. 15 illustrates an example of an operation of an electronic device according to an embodiment.
FIG. 16 illustrates an example of an operation of an electronic device according to an embodiment.

### [Mode for Invention]

Hereinafter, various embodiments of the present document will be described with reference to the accompanying drawings.

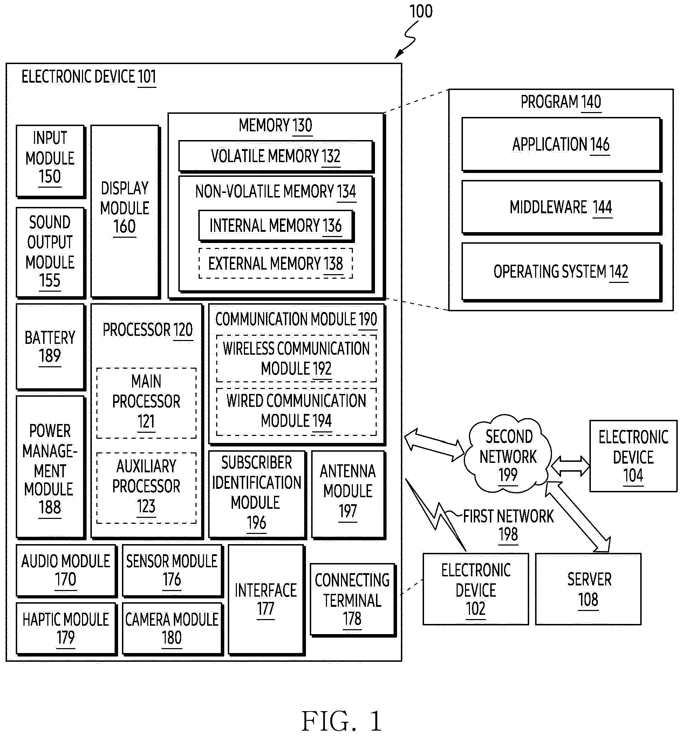

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

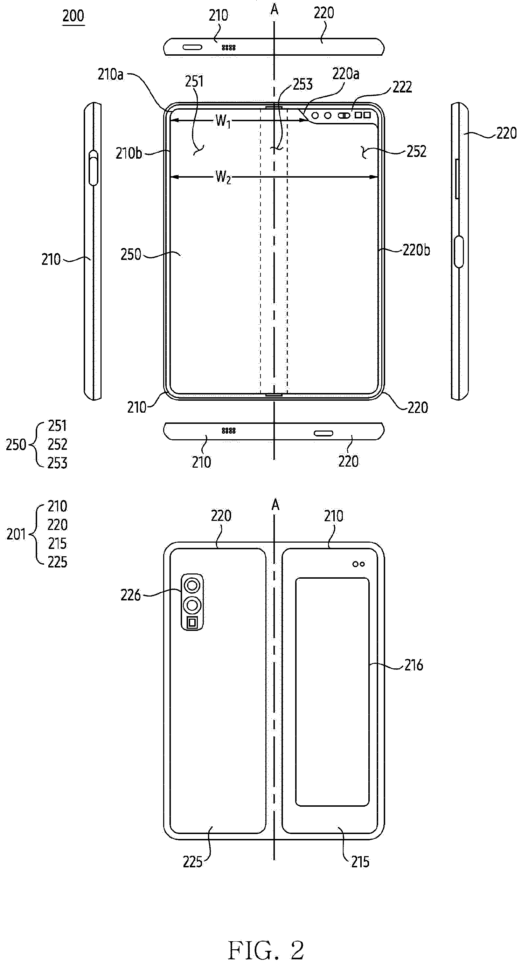

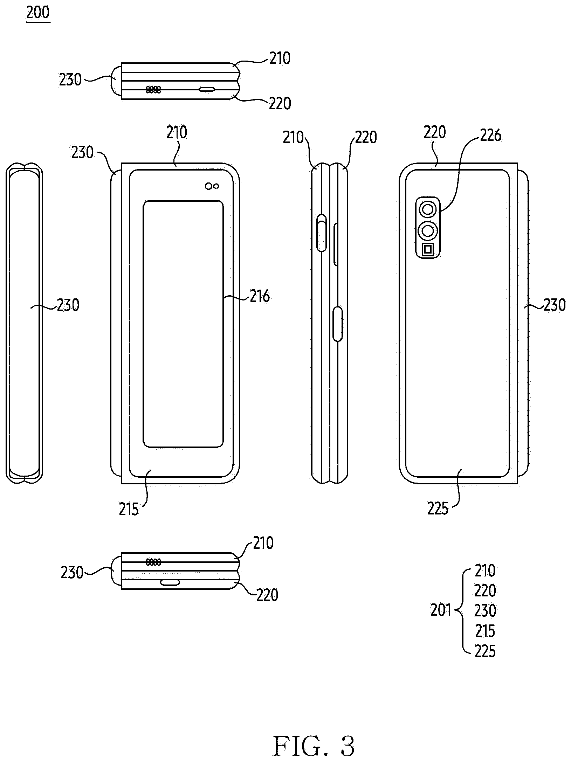

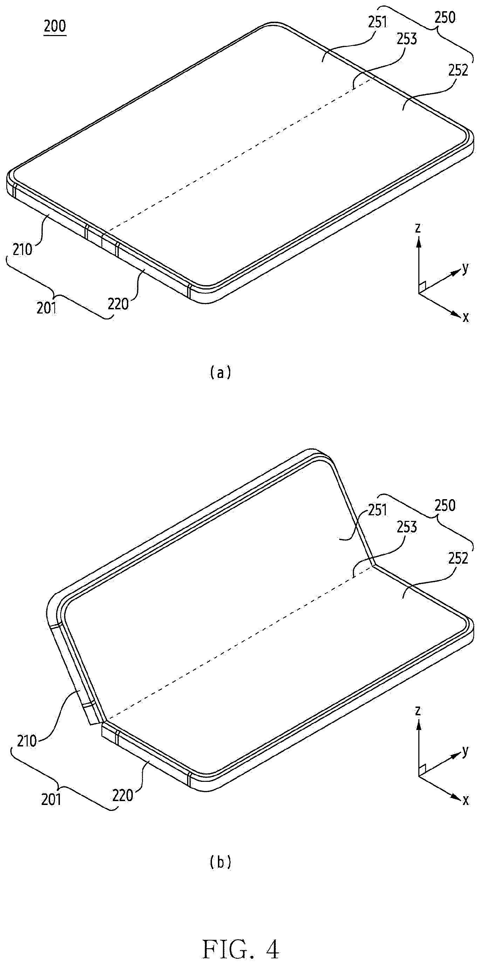

FIG.2 is a view illustrating an unfolded status of the electronic device 200 according to various embodiments of the present invention. the present invention. FIG. 3 is a view illustrating a folded status of the electronic device 200 according to various embodiments of the present invention. FIG. 4 is a perspective view illustrating an example of a fully unfolded status or a partially unfolded intermediate status of the electronic device 200 according to various embodiments of the present invention.

The electronic device 200 of FIGS. 2 to 4 is an example of the electronic device 101 illustrated in FIG. 1, and may be a foldable or bendable electronic device.

In the drawings below FIG. 4, a spatial coordinate system defined as an X-axis, a Y-axis, and a Z-axis orthogonal to each other is illustrated. Herein, the X-axis may indicate the width direction of the electronic device, the Y-axis may indicate the length direction of the electronic device, and the Z-axis may indicate the height (or thickness) direction of the electronic device. In the description to be described below, the term "first direction" may mean a direction parallel to the Z-axis.

Referring to FIGS. 2 and 3, in an embodiment, the electronic device 200 may include a foldable housing 201 and a flexible or foldable display 250(hereinafter, abbreviated as "display" 250) (e.g., display device 160 of FIG. 1) disposed in a space formed by the foldable housing 201. According to an embodiment, a surface on which the display 250 is disposed (or a surface on which the display 250 is viewed from the outside of the electronic device 200) may be defined as a front surface of the electronic device 200. In addition, an opposite surface of the front surface may be defined as the rear surface of the electronic device 200. In addition, a surface surrounding a space between the front surface and the rear surface may be defined as a side surface of the electronic device 200.

According to various embodiments, the foldable housing 201 may include a first housing structure 210, a second housing structure 220 including a sensor region 222, a first rear cover 215, a second rear cover 225, and a hinge structure 230. Herein, the hinge structure 230 may include a hinge cover covering a foldable part of the foldable housing 201. The foldable housing 201 of the electronic device 200 is not limited to the shape and coupling illustrated in FIGS. 2 and 3, and may be implemented by a combination and/or coupling of other shapes or components. For example, in another embodiment, the first housing structure 210 and the first rear cover 215 may be integrally formed, and the second housing structure 220 and the second rear cover 225 may be integrally formed.

According to various embodiments, the first housing structure 210 may include a first surface connected to the hinge structure 230 and facing in a first direction, and a second surface facing in a second direction opposite to the first direction. The second housing structure 220 may include a third surface connected to the hinge structure 230 and facing in a third direction, and a fourth surface facing in a fourth direction opposite to the third direction. The second housing structure 220 may rotate with respect to the first housing structure 210 with the hinge structure 230 as the center. The electronic device 200 may switch to a folded status or an unfolded status.

According to an embodiment, in the electronic device 200, the first surface may face the third surface in a fully folded status, and the third direction may be the same as the first direction in a fully unfolded status.

According to various embodiments, the first housing structure 210 and the second housing structure 220 may be disposed on both sides of the folding axis A, and may have an overall symmetrical shape with respect to the folding axis A. As will be described later, the first housing structure 210 and the second housing structure 220 may have different angles or distances formed from each other depending on whether the state of the electronic device 200 is an unfolded status, a folded status, or a partially unfolded (or partially folded) intermediate status. According to an embodiment, unlike the first housing structure 210, the second housing structure 220 further includes the sensor region 222 in which various sensors are disposed, but may have a shape symmetrical to each other in other regions.

According to various embodiments, as illustrated in FIG. 2, the first housing structure 210 together with the second housing structure 220 may form recesses for accommodating the display 200 together. According to an embodiment, due to the sensor region 222, the recess may have two or more different widths in a direction perpendicular to the folding axis A. According to an embodiment, the recess may have a first width w1 between a first part 210a parallel to the folding axis A in the first housing structure 210 and a first part 220a formed at an edge of the sensor region 222 in the second housing structure 220. The recess may have a second width w2 formed by a second part 220b of the first housing structure 210 and a second part 220b parallel to the folding axis A without corresponding to the sensor region 222 of the second housing structure 220. In this case, the second width w2 may be formed to be longer than the first width w1. According to an embodiment, the first part 220a and the second part 220b of the second housing structure 220 may have different distances from the folding axis A from each other. The width of the recess is not limited to the illustrated example. In another embodiment, the recess may have a plurality of widths by a part having a shape of the sensor region 222 or an asymmetrical shape of the first housing structure 210 and the second housing structure 220. According to various embodiments, the sensor region 222 may be formed to have a certain region, adjacent to a corner of the second housing structure 220. However, the arrangement, shape, and size of the sensor region 222 are not limited to the illustrated example. For example, in another embodiment, the sensor region 222 may be provided in another corner of the second housing structure 220 or in an arbitrary region between the upper corner and the lower corner. In an embodiment, components for performing various functions embedded in the electronic device 200 may be exposed on the front surface of the electronic device 200 through the sensor region 222, or through one or more openings provided in the sensor region 222. In various embodiments, the components may include various types of sensors. The sensor may include, for example, at least one of a front camera, a receiver, or a proximity sensor. According to various embodiments, the sensor region 222 in the second housing structure 220 may be omitted or may be formed at a position different from that illustrated in the drawing.

According to various embodiments, at least a part of the first housing structure 210 and the second housing structure 220 may be formed of a metal material or a non-metal material having rigidity of a size selected to support the display 250. At least a part formed of the metal material may provide a ground plane of the electronic device 200, and may be electrically connected to a ground line formed on a printed circuit board disposed within the foldable housing 201.

According to various embodiments, the first rear cover 215 may be disposed on one side of the folding axis A on the rear surface of the electronic device 200, for example, may have a substantially rectangular edge, and the edge may be surrounded by the first housing structure 210. Similarly, the second rear cover 225 may be disposed on another side of the folding axis A on the rear surface of the electronic device 200, and an edge thereof may be surrounded by the second housing structure 220.

According to various embodiments, the first rear cover 215 and the second rear cover 225 may have a substantially symmetrical shape around the folding axis A. However, the first rear cover 215 and the second rear cover 225 do not necessarily have a symmetrical shape, and in another embodiments, the electronic device 200 may include the first rear cover 215 and the second rear cover 225 having various shapes. In still another embodiment, the first rear cover 215 may be integrally formed with the first housing structure 210, and the second rear cover 225 may be integrally formed with the second housing structure 220.

According to various embodiments, the first rear cover 215, the second rear cover 225, the first housing structure 210, and the second housing structure 220 may form a space in which various components (e.g., a printed circuit board or a battery) of the electronic device 200 may be disposed. According to an embodiment, one or more components may be disposed on the rear surface of the electronic device 200 or may be visually exposed. For example, at least a part of the sub-display may be visually exposed through the first rear region 216 of the first rear cover 215. In another embodiment, one or more components or sensors may be visually exposed through the second rear region 226 of the second rear cover 225. In various embodiments, the sensor may include a proximity sensor and/or a rear camera.

According to various embodiments, the front camera exposed to the front surface of the electronic device 200 through one or more openings provided in the sensor region 222 or the rear camera exposed through the second rear region 226 of the second rear cover 225 may include one or more lenses, an image sensor, and/or an image signal processor. The flash may include, for example, a light emitting diode or a xenon lamp. In some embodiments, two or more lenses (infrared cameras, wide-angle and telephoto lenses) and image sensors may be disposed on one side of electronic device 200.

Referring to FIG. 3, the hinge cover may be configured to cover internal parts (e.g., the hinge structure 230) by being disposed between the first housing structure 210 and the second housing structure 220. According to an embodiment, the hinge structure 230 may be covered by a part of the first housing structure 310 and the second housing structure 320 or exposed to the outside according to an unfolded status, an intermediate status, or a folded status of the electronic device 200.

According to an embodiment, as illustrated in FIG. 2, when the electronic device 200 is in an unfolded status (e.g., a fully unfolded status), the hinge structure 230 may be covered by the first housing structure 210 and the second housing structure 220 and may not be exposed. As another example, as illustrated in FIG. 3, when the electronic device 200 is in a folded status (e.g., a fully folded status), the hinge structure 230 may be exposed to the outside between the first housing structure 210 and the second housing structure 220. As still another example, when the first housing structure 210 and the second housing structure 220 are in an intermediate status that is folded with a certain angle, the hinge structure 230 may be partially exposed to the outside between the first housing structure 210 and the second housing structure 220. However, in this case, the exposed region may be less than the fully folded status. In an embodiment, the hinge structure 230 may include a curved surface.

According to various embodiments, the display 250 may be disposed on a space formed by the foldable housing 201. For example, the display 250 is seated on a recess formed by the foldable housing 201 and may be viewed from the outside through the front surface of the electronic device 200. For example, the display 250 may compose most of the front surface of the electronic device 200. Accordingly, the front surface of the electronic device 200 may include the display 250 and a partial region of the first housing structure 210 adjacent to the display 250 and a partial region of the second housing structure 220. In addition, the rear surface of the electronic device 200 may include a first rear cover 215, a partial region of the first housing structure 210 adjacent to the first rear cover 215, a second rear cover 225, and a partial region of the second housing structure 220 adjacent to the second rear cover 225.

According to various embodiments, the display 250 may mean a display in which at least some regions are deformable into a flat or curved surface. According to an embodiment, the display 250 may include the folding region 253, a first region 251 disposed on one side (e.g., the left side of the folding region 253 illustrated in FIG. 2) with respect to the folding region 253 and a second region 252 disposed on another side (e.g., right side of the folding region 253 illustrated in FIG. 2).

However, the region classification of the display 250 illustrated in FIG. 2 is exemplary, and the display 250 may be classified into a plurality of regions (for example, four or more or two) according to a structure or a function. For example, in the embodiment illustrated in FIG. 2, the region of the display 200 may be divided by a folding region 203 extending parallel to the folding axis A, but in another embodiment, the region of the display 200 may be divided based on another folding axis (e.g., a folding axis parallel to a width direction of the electronic device).

According to various embodiments of the present disclosure, the display 250 may be coupled to or disposed adjacent to a touch panel provided with a touch sensing circuit and a pressure sensor capable of measuring the intensity (pressure) of the touch. For example, the display 250 is an example of a touch panel, and may be coupled to or disposed adjacent to a touch panel detecting an electromagnetic resonance (EMR) type stylus pen.

According to various embodiments, the first region 251 and the second region 252 may have an overall symmetrical shape around the folding region 253. However, unlike the first region 251, the second region 252 may include a notch which is cut according to the presence of the sensor region 222, but may have a shape symmetrical to the first region 251 in another regions. In other words, the first region 251 and the second region 252 may include a part having a symmetrical shape and a part having an asymmetrical shape.

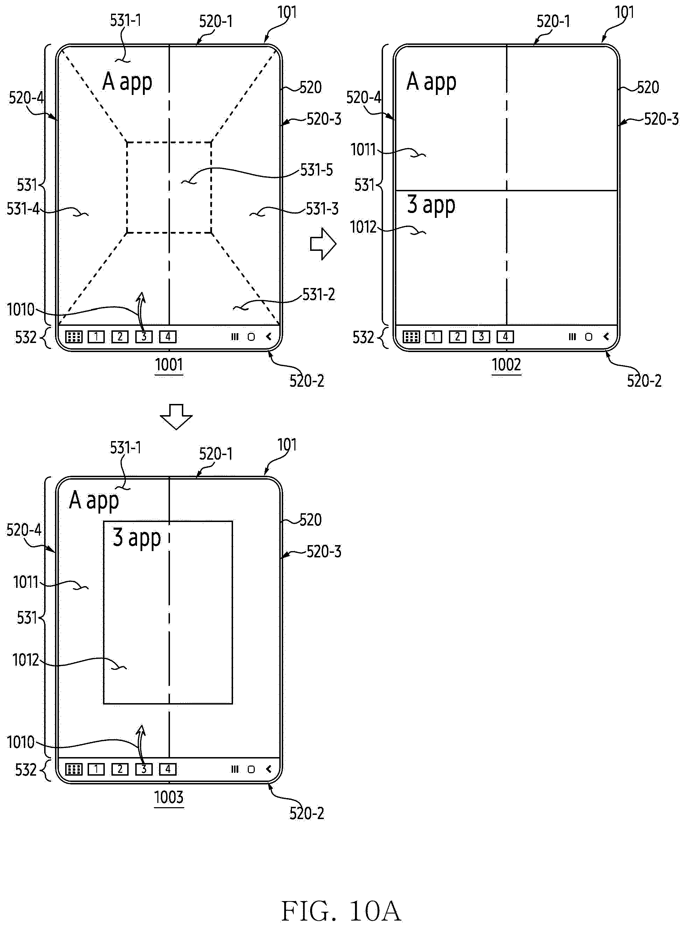

According to various embodiments, edge thicknesses of the first region 251 and the second region 252 may be formed differently from edge thicknesses of the folding region 253. The edge thickness of the folding region 253 may be formed to be thinner than thicknesses of the first region 251 and the second region 252. In terms of thickness, the first region 251 and the second region 252 may have an asymmetric shape when the first region 251 and the second region 252 are viewed in cross-section. For example, the edge of the first region 251 may be formed to have a first radius of curvature, and the edge of the second region 252 may be formed to have a second radius of curvature different from the first radius of curvature. In another embodiment, in terms of thickness, the first region 251 and the second region 252 may have a symmetrical shape when the first region 251 and the second region 252 are viewed in cross-section. It will be described in detail later through embodiments disclosed in FIG. 10A or below.

Hereinafter, operations of the first housing structure 210 and the second housing structure 220 according to the state (e.g. folded status, unfolded status, or intermediate status) of the electronic device 200, and regions of the display 250 will be described.

According to various embodiments, when the electronic device 200 is in an unfolded status (e.g., FIG. 2), the first housing structure 210 and the second housing structure 220 may be disposed to face the same direction while forming an angle of 180 degrees. The surface of the first region 251 and the surface of the second region 252 of the display 250 may form 180 degrees with each other and may face the same direction (e.g., the front direction of the electronic device). The folding region 253 may form a same plane as the first region 251 and the second region 252.

According to various embodiments, when the electronic device 200 is in a folded status (e.g., FIG. 3), the first housing structure 210 and the second housing structure 220 may be disposed to face each other. The surface of the first region 251 and the surface of the second region 252 of the display 250 may form a narrow angle (e.g., between 0 and 10 degrees), and may face each other. At least a part of the folding region 253 may be formed of a curved surface having a preset curvature.

According to various embodiments, when the electronic device 200 is in an intermediate status, the first housing structure 210 and the second housing structure 220 may be disposed at a certain angle with each other. The surface of the first region 251 and the surface of the second region 252 of the display 250 may form an angle greater than the folded status and smaller than the unfolded status. At least a part of the folding region 253 may be formed of a curved surface having a certain curvature, and the curvature at this time may be smaller than that in the folded status.

FIG. 4 (a) may illustrate an unfolded status of the electronic device 200, and FIG. 4 (b) may illustrate an intermediate status in which the electronic device 200 is partially unfolded. As described above, the electronic device 200 may switch to a folded status or an unfolded status. According to an embodiment, when viewed in the folding axis direction (e.g., the A axis of FIG. 2), the electronic device 200 may be folded in two ways: 'in-folding' in which the front surface of the electronic device 200 is folded to form an acute angle, and 'out-folding' in which the front surface of the electronic device 200 is folded to form an obtuse angle. For example, in the folded status of the electronic device 200, the first surface of the first housing structure 210 may face the third surface of the second housing structure 220, and in the unfolded status, the first surface of the first housing structure 210 and the third surface of the second housing structure 220 may face the same direction (e.g., a direction parallel to the Z-axis).

For another example, when the electronic device 200 is folded in an out-folding type, the second surface of the first housing structure 210 may face the fourth surface of the second housing structure 220.

In addition, although not illustrated in the drawings, the electronic device 200 may include a plurality of hinge axes (e.g., two mutually parallel hinge axes including the A axis in FIG. 2 and the other axis parallel to the above A axis), and in this case, the electronic device 200 may be folded in a 'multi-folding' type in which the in-folding and the out-folding types are combined.

The in-folding type may mean to a state in which the display 250 is not exposed to the outside in a fully folded status. The out-folding type may mean a state in which the display 250 is exposed to the outside in a fully folded status. FIG. 4 (b) illustrates an intermediate status that is partially unfolded in the process of in-folding of the electronic device 200.

Hereinafter, for convenience, a state in which the electronic device 200 is folded in an in-folding type will be mainly described, but it also should be noted that these descriptions may be applied to a state in which the electronic device 200 is folded in an out-folding type.

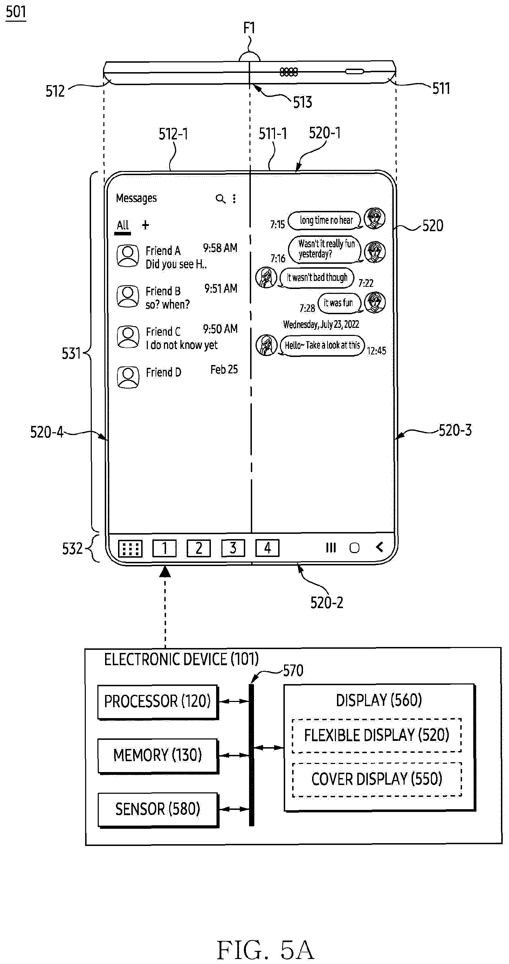

FIGS. 5A to 5C illustrate an example of screens displayed by an electronic device 101 based on different states 501, 502, and 503, according to an embodiment. The electronic device 101 of FIGS. 5A to 5C may include the electronic device 101 of FIG. 1 and/or the electronic device 200 of FIGS. 2 to 4.

Referring to FIG. 5A, a block diagram of one or more hardware included in the electronic device 101 according to an embodiment is illustrated. According to an embodiment, the electronic device 101 may include at least one of a processor 120, a memory 130, a display 560, and a sensor 580. The processor 120, the memory 130, the display 560, and the sensor 580 may be electronically and/or operably coupled with each other by an electronic component such as a communication bus 570. Although illustrated based on different blocks, the embodiment is not limited thereto. The type and/or number of a hardware component included in the electronic device 101 is not limited as illustrated in the block diagram of FIG. 5A. For example, the electronic device 101 may include only some of the hardware illustrated based on the block diagram of FIG. 5A.

According to an embodiment, the processor 120 of the electronic device 101 may include the hardware component for processing data based on one or more instructions. The hardware component for processing the data may include, for example, Arithmetic and Logic Unit (ALU), Floating Point Unit (FPU), Field Programmable Gate Array (FPGA), application processor (AP), and/or Central Processing Unit (CPU). The number of the processor 120 may be one or more. For example, the processor 120 may have a structure of a multi-core processor such as a dual core, a quad core, or a hexa core. The processor 120 of FIG. 5A may include the processor 120 of FIG. 1.

According to an embodiment, the memory 130 of the electronic device 101 may include the hardware component for storing the data and/or the instruction inputted and/or outputted to the processor 120. The memory 130 may include, for example, Volatile Memory such as Random-Access Memory (RAM), and/or Non-Volatile Memory such as Read-Only Memory (ROM). The Volatile Memory may include, for example, at least one of Dynamic RAM (DRAM), Static RAM (SRAM), Cache RAM, and Pseudo SRAM (PSRAM). The Non-Volatile Memory may include, for example, at least one of Programmable ROM (PROM), Erasable PROM (EPROM), Electrically Erasable PROM (EEPROM), flash memory, hard disk, compact disk, and Embedded Multi Media Card (eMMC). The memory 130 of FIG. 5A may include the memory 130 of FIG. 1.

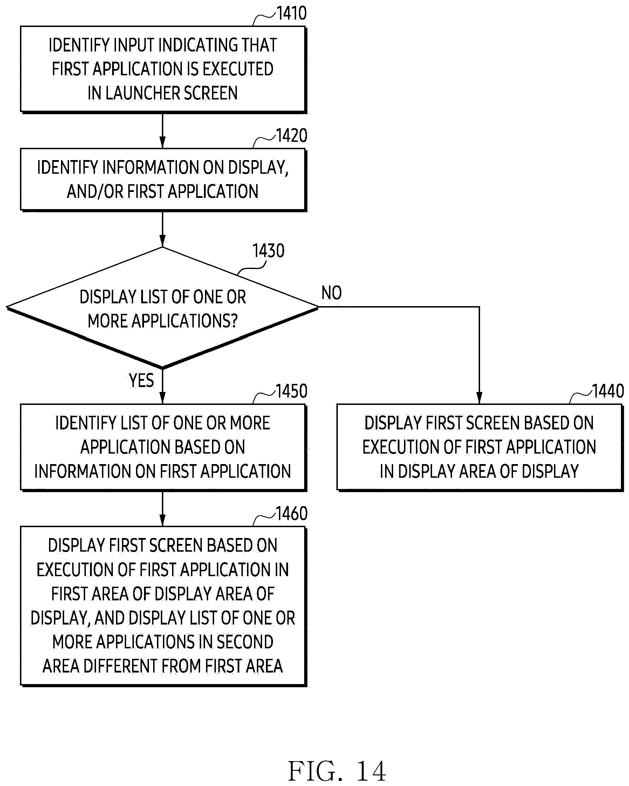

In the memory 130, the one or more instructions indicating a calculation and/or an operation to be performed on data by the processor 120 may be stored. A set of the one or more instructions may be referred to as firmware, operating system, process, routine, subroutine, and/or application. For example, the electronic device 101 and/or the processor 120 may perform at least one of the operations of FIGS. 14 to 16 when the set of a plurality of instructions distributed in the form of the operating system, firmware, driver, and/or application is executed. Hereinafter, that the application is installed in the electronic device 101 may mean that the one or more instructions provided in the form of the application are stored in the memory 130 of the electronic device 101 and that the one or more applications are stored in an executable format (e.g., a file with an extension preset by the operating system of the electronic device 101) by the processor 120 of the electronic device 101.

According to an embodiment, the display 560 of the electronic device 101 may output visualized information to a user. In an embodiment, the display 560 may be a flexible display deformable by an external force applied to the display 560. The display 560 may include a Liquid Crystal Display (LCD), a Plasma Display Panel (PDP), one or more Light Emitting Diodes (LEDs), and/or one or more OLEDs. According to an embodiment, the display 560 may include a sensor (e.g., a touch sensor panel (TSP)) for detecting an external object (e.g., a user's finger) on the display 560. For example, based on the TSP, the electronic device 101 may detect the external object contacted on the display 560 or floating on the display 560. In response to detecting the external object, the electronic device 101 may execute a function related to a specific visual object corresponding to a portion of the display 560 that is in contact with the external object among visual objects being displayed in the display 560.

According to an embodiment, the sensor 580 of the electronic device 101 may generate electronic information that may be processed by the processor 120 and/or the memory 130 from non-electronic information related to the electronic device 101. The electronic information generated by the sensor 580 may be stored in the memory 130, may be processed by the processor 120, and/or may be transmitted to another electronic device distinct from the electronic device 101. For example, the sensor 580 may include an acceleration sensor for measuring a physical movement of the electronic device 101. The acceleration sensor may output the electronic information indicating the magnitude of gravity acceleration measured at each of a plurality of designated axes (e.g., x-axis, y-axis, and z-axis) perpendicular to each other. A processor 110 of the electronic device 101 according to an embodiment may measure a posture of the electronic device 101 in a physical space based on the electronic information outputted from the acceleration sensor. The posture measured by the electronic device 101 may indicate an orientation of the electronic device 101 measured by the acceleration sensor and/or a form of the electronic device 101 (e.g., a form of the electronic device 101 deformed by the external force to be described later in FIGS. 5A to 5C). The form of the electronic device 101 may be measured by, for example, a hall sensor. The electronic device 101 may determine the mode of the electronic device 101 based on the measured posture. For example, the electronic device 101 is a plurality of preset modes, and may identify a mode corresponding to the posture of the electronic device 101 among the preset modes including a landscape mode and a portrait mode.

For example, in case that the housing and/or the display 560 of the electronic device 101 has a width and a length, the landscape mode may include a state where an angle between the direction of the gravity acceleration measured by the acceleration sensor and the longitudinal direction of the electronic device 101 is included in a preset range including a right angle. In the above example, the portrait mode may include a state where the angle between the direction of the gravity acceleration measured by the acceleration sensor and the width direction of the electronic device 101 is included in the preset range including the right angle. In an embodiment, the plurality of preset mode is another mode distinct from the above-described landscape mode and portrait mode, and may further include, for example, a mode related to the form of the electronic device 101 deformed by the external force. For example, the electronic device 101 may measure the electronic information indicating the form of the electronic device 101 by using another sensor distinct from the acceleration sensor.

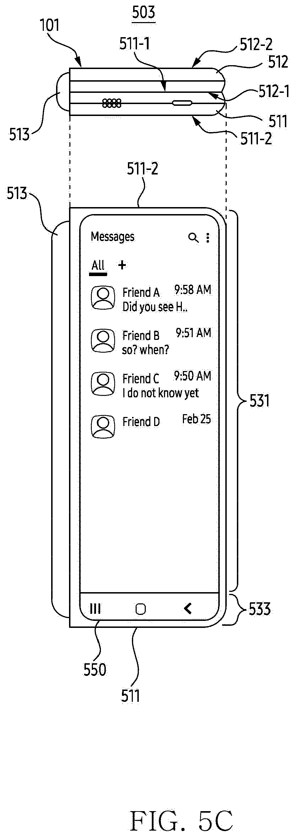

Referring to FIGS. 5A to 5C, according to an embodiment, the electronic device 101 may further include at least one housing forming an exterior of the electronic device 101. Referring to FIGS. 5A to 5C, an example of the exterior of the electronic device 101 formed by the housing is illustrated. Referring to FIG. 5A, according to an embodiment, the electronic device 101 may include a first housing 511 including a first surface 511-1 and a second surface (e.g., a second surface 511-2 of FIG. 5C) faced away from the first surface 511-1. According to an embodiment, the electronic device 101 may include a second housing 512 including a third surface 512-1 and a fourth surface (e.g., a second surface 512-2 of FIG. 5C) faced away from the third surface 512-1. According to an embodiment, the electronic device 101 may include a folding housing 513 pivotably connecting a side surface of the first housing 511 and a side surface of the second housing 512 facing the side surface of the first housing 511 by the folding axis. According to an embodiment, the electronic device 101 may include a flexible display 520 that is an example of the display 560. The flexible display 520 may be disposed on the first surface 511-1 of the first housing 511 and the third surface 512-1 of the second housing 512 across the folding housing 513. According to an embodiment, the electronic device 101 may include a cover display 550 that is an example of the display 560. Referring to FIG. 5C, the cover display 550 may be disposed on the second surface 511-2 of the first housing 511.

In an embodiment where the first housing 511 and the second housing 512 of the electronic device 101 are pivotably coupled by the folding housing 513, the processor 120 may identify an angle between the first housing 511, the folding axis formed in the folding housing 513, and the second housing 512 by using the sensor 580. The sensor 580 may include the hall sensor for identifying the angle. The hall sensor may include at least one magnet and at least one magnetic field sensor. In the hall sensor, the at least one magnet and the at least one magnetic field sensor may be disposed in each of the first housing 511 and the second housing 512. As the angle of the first housing 511, the folding housing 513, and the second housing 512 are adjusted, the distance between the at least one magnet and the at least one magnetic field sensor may be adjusted. The magnitude of the magnetic field measured by the at least one magnetic field sensor and formed by the at least one magnet may be changed, by the distance. According to an embodiment, the processor 120 may identify the angle between the first housing 511, the folding axis, and the second housing 512 based on at least the magnitude of the magnetic field measured by the at least one magnetic field sensor. The embodiment is not limited thereto, and according to an embodiment, the processor 120 may identify the angle by using an inertia measurement unit (IMU) sensor.

According to an embodiment, the electronic device 101 may identify the state of the electronic device 101 based on one angle range including an angle formed by the folding axis of the folding housing 513 among preset angle ranges. For example, a first preset range may be a range including 0 (e.g., a range of 0 ° or more and 10 ° or less). A second preset range, different from the first preset range may be formed in an angle less than or equal to a preset angle (e.g., 79 °) less than the right angle (e.g., a range of 21 ° or more and 79 ° or less). Between the first preset range and the second preset range, a padding based on the hysteresis of the sensor 580 identifying the angle of the folding axis may be formed (e.g., a range of 11 ° or more and 20 ° or less). A third preset range different from the first preset range to the second preset range may be formed in an angle of 80 ° or more (e.g., a range of 80 ° or more and 130 ° or less). A fourth preset range different from the first preset range to the third preset range may be a range including 180 ° (e.g., a range of 131 ° or more and 180 ° or less).

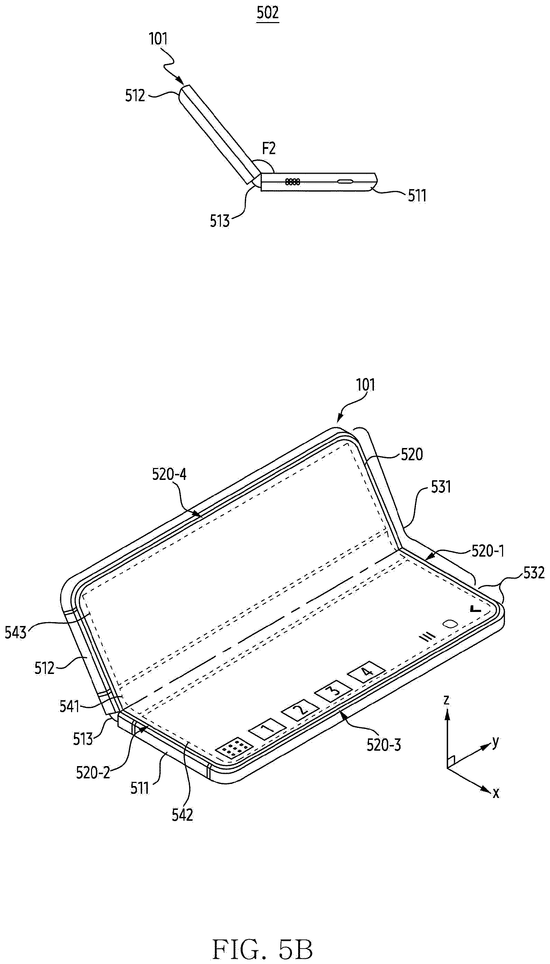

According to an embodiment, the electronic device 101 may identify the state of the electronic device 101 based on one angle range including the angle of the folding axis among the preset angle ranges. A folded state and/or a closed state may indicate that the angle of the folding axis is included in the first preset range. A state 503 of FIG. 5C may be included in the folded state. A sub-folded state, a sub-closed state, a tent state, and/or an acute angle state may indicate that the angle of the folding axis is included in the second preset range. A sub-unfolded state, a sub-opened state, and/or an obtuse angle state may indicate that the angle of the folding axis is included in the third preset range. The state 502 of FIG. 5B may be included in the sub-unfolded state. The unfolded state, an opened state, and/or a straight angle state may indicate that the angle of the folding axis is included in the fourth preset range. The state 501 of FIG. 5A may be included in the unfolded state.

Referring to FIG. 5A, according to an embodiment, the exemplary state 501 where the electronic device 101 operates in the unfolded state is illustrated, based on an angle F1 of the first housing 511, the folding axis, and the second housing 512. In the unfolded state, the electronic device 101 may display a user interface (III) for interaction between the electronic device 101 and the user in the display area of the flexible display 520 among the flexible display 520 or the cover display 550. Referring to FIG. 5A, an example of the UI displayed by the electronic device 101 in the display area of the flexible display 520 is illustrated. Hereinafter, the screen may mean the UI displayed in at least a portion of the display 560 including the flexible display 520 or the cover display 550. The screen may include, for example, an activity of an android operating system.

According to an embodiment, the electronic device 101 may select a display on which the screen based on at least one application executed by the processor 120 will be displayed among the flexible display 520 and the cover display 550 based on the angle between the first housing 511, the folding axis, and the second housing 512. For example, in the unfolded state including the state 501, the electronic device 101 may display the screen in the flexible display 520 among the flexible display 520 or the cover display 550. Referring to FIG. 5A, in the state 501, the electronic device 101 may display the screen based on execution of the first application on the flexible display 520.

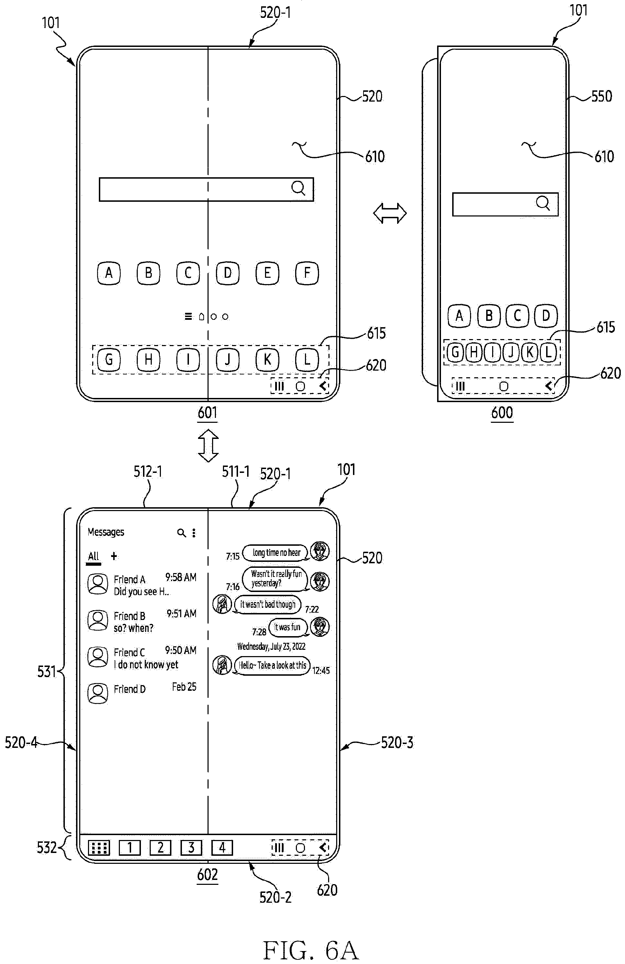

According to an embodiment, the electronic device 101 may divide the display area of the flexible display 520 into a first area 531 that displays the screen based on the execution of the at least one application executed by the processor 120 and a second area 532 that is different from the first area 531. The electronic device 101 may display a screen based on another application (e.g., an application stored in the memory 130 as a member of, and/or bundled with, an operating system 142 of FIG. 1) different from the at least one application and/or a process (e.g., a system process), in the second area 532. According to an embodiment, an operation of identifying whether the electronic device 101 divides the first area 531 and the second area 532 will be described with reference to FIGS. 6A to 6B.

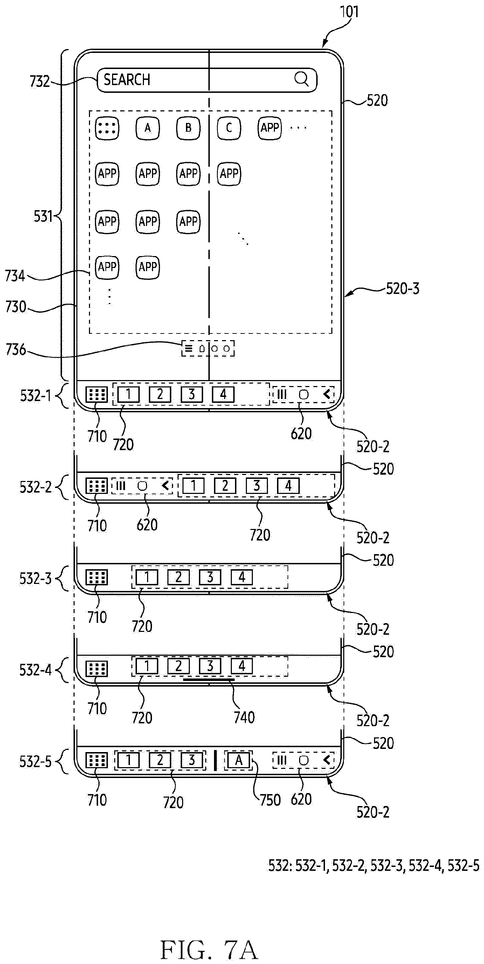

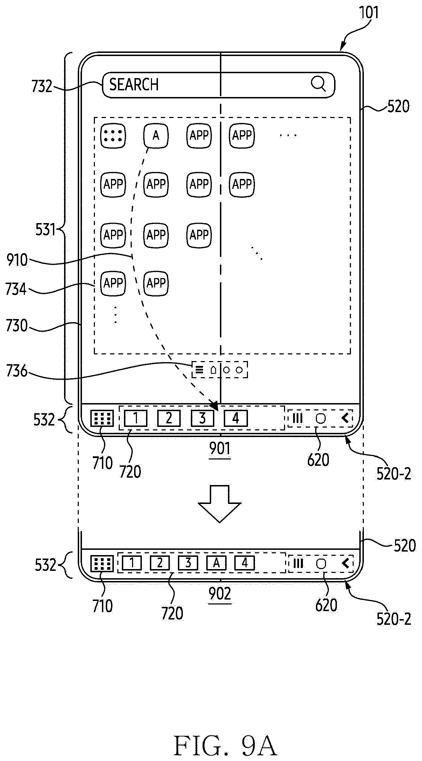

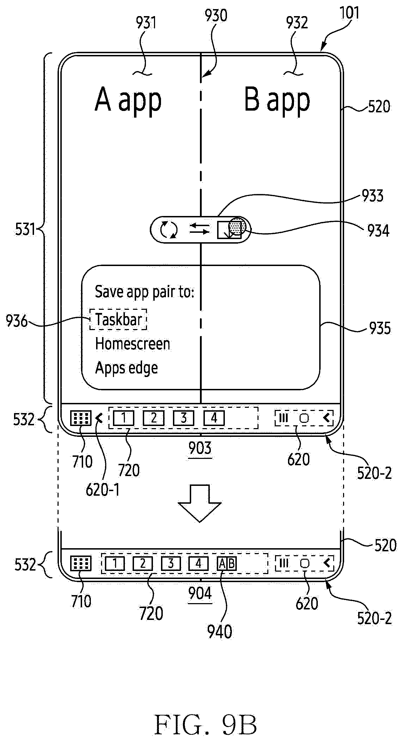

As shown in the state 501 of FIG. 5A, in the first state displaying the screen based on execution of the first application (e.g., a messenger application in the exemplary state 501 of FIG. 5A) in the first area 531 of the display area of the flexible display 520, according to an embodiment, the electronic device 101 may display a list of applications for selecting the at least one application executed based on the first area 531 in the second area 532. In an embodiment, at least a portion of the second area 532 on which the list of the applications is displayed may be referred to as a task bar. The list of the applications and/or an exemplary structure of the task bar will be described with reference to FIGS. 7A to 7B. An example of an operation in which the list of the applications is changed based on the interaction between the electronic device 101 and the user will be described with reference to FIGS. 9A and 9B.

According to an embodiment, the electronic device 101 may change a screen displayed in the first area 531 based on an input received through the second area 532. For example, in response to the input indicating that a specific application is selected from the list of the applications displayed in the second area 532, the electronic device 101 may display the screen based on the execution of the specific application in the first area 531. The number of the screen displayed by the electronic device 101 in the first area 531 may be one or more. For example, in a state where the processor 120 of the electronic device 101 executes a plurality of applications based on multitasking, the electronic device 101 may display different screens corresponding to each of the plurality of applications in the first area 531 of the display area of the flexible display 520. According to an embodiment, an operation of changing the screen displayed in the first area 531 based on the input received by the electronic device 101 through the second area 532 will be described with reference to FIGS. 7A to 7B, 10A to 10B, and 11.

Referring to FIG. 5A, the flexible display 520 may comprise a first edge 520-1 and a second edge 520-2 parallelly separated from the first edge 520-1, a third edge 520-3 extending from one end of the first edge 520-1 to one end of the second edge 520-2, and a fourth edge 520-4 extending from the other end of the first edge 520-1 to the other end of the second edge 520-2. According to an embodiment, the electronic device 101 may select one edge where the second area 532 is to be disposed based on the direction and/or mode (e.g., the landscape mode, and/or the portrait mode) of the electronic device 101 from among the edges of the flexible display 520 (e.g., the first edge 520-1 to the fourth edge 520-4). In the state 501 of FIG. 5A included in the unfolded state, the electronic device 101 may form the first area 531 and the second area 532 so that the second edge 520-2 of the edges of the flexible display 520 is included in the second area 532. The second edge 520-2 of the flexible display 520 may correspond to the lower end of the screen displayed in the display area of the flexible display 520.

In an embodiment of displaying the screen through the display area of the flexible display 520, the electronic device 101 may divide the first area 531 and the second area 532 of the display area based on the form of the flexible display 520. In an embodiment where the flexible display 520 is disposed across the first housing 511, the folding housing 513, and the second housing 512, the form of the flexible display 520 may be related to the angle (e.g., the angle F1 in the state 501 of FIG. 5A) between the first housing 511, the folding axis in the folding housing 513, and the second housing 512. Referring to FIG. 5B, the state 502 where an angle F2 of the first housing 511, the folding axis, and the second housing 512 is less than the straight angle is exemplarily illustrated. In the state 502, the angle F2 of the first housing 511, the folding axis, and the second housing 512 may be included in the preset range (e.g., a range of 80 ° or more and 130 ° or less) in the obtuse angle.

In the exemplary state 502 of FIG. 5B, according to an embodiment, the electronic device 101 may identify the form of the flexible display 520 based on the angle F2 of the folding axis in the folding housing 513. In the display area of the flexible display 520, the electronic device 101 may identify a first portion 541 formed on the folding housing 513, a second portion 542 formed on the first housing 511, and a third portion 543 formed on the second housing 512. Referring to FIG. 5B, in the state 502, the first portion 541 of the flexible display 520 formed on the folding housing 513 may have a bent form based on the angle F2.

According to an embodiment, the electronic device 101 may display the second area 532 including the list of the applications in another portion different from the bent portion (e.g., the first portion 541) of the flexible display 520, in the state 502 where the flexible display 520 has a form different from that of a flat surface. Referring to FIG. 5B, in the state 502, the electronic device 101 may select one edge on which the second area 532 is to be disposed among a first edge 520-1 overlapped with the folding housing 513, a third edge 520-3 different from the second edge 520-2, and a fourth edge 520-4, among the edges of the flexible display 520. For example, the electronic device 101 may identify the direction of the gravity acceleration applied to the electronic device 101 based on a sensor (e.g., the sensor 580 of FIG. 5A) such as the acceleration sensor. Based on the direction of the gravity acceleration, the electronic device 101 may select one edge on which the second area 532 is to be disposed among the third edge 520-3 and the fourth edge 520-4.

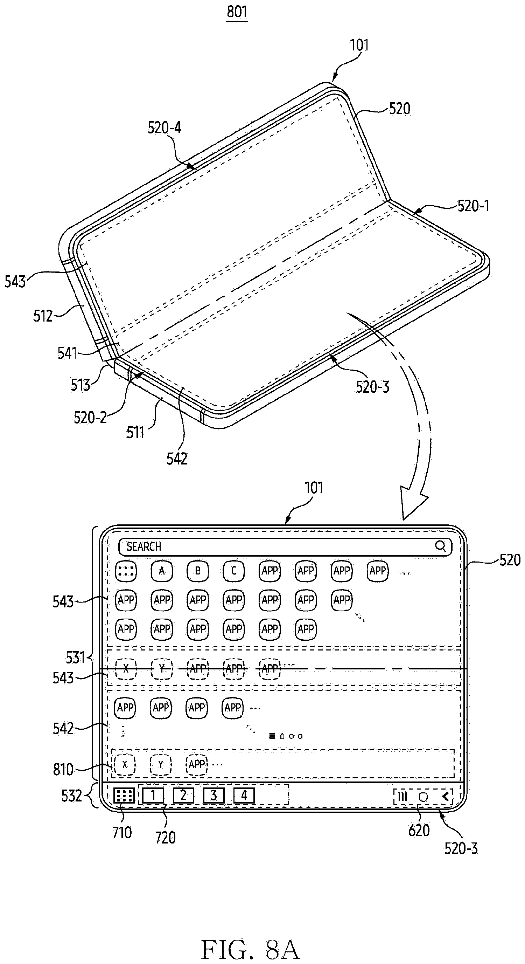

In the exemplary state 502 of FIG. 5B, it is assumed that the direction of the first surface 511-1 of the first housing 511 is parallel to the direction of the gravity acceleration applied to the electronic device 101. For example, in case that the user puts down the first housing 511 of the electronic device 101 in the unfolded state on the ground, the second housing 512 of the electronic device 101 may be erected from the first housing 511 horizontal to the ground. According to an embodiment, the electronic device 101 may display the second area 532 based on the third edge 520-3 on the first housing 511 based on identifying that the direction of the first surface 511-1 of the first housing 511 is parallel to the direction of the gravity acceleration. For example, the fourth edge 520-4 faced away from the third edge 520-3 may correspond to the upper end of the screen displayed in the display area of the flexible display 520. According to an embodiment, the electronic device 101 may support control of the electronic device 101 based on the second portion 542 on the first housing 511 in the flexible display 520 in order to prevent rollover of the second housing 512 due to contact between the second housing 512 and the external object (e.g., a user's fingertip), in the state 502. According to an embodiment, an example of an operation performed by the electronic device 101 based on the list of the applications displayed in the second area 532 in the state 502 will be described with reference to FIGS. 8A to 8B, 10B, and 12. According to an embodiment, the electronic device 101 may obtain the list of the applications to be displayed in the second area 532 based on the form of the electronic device 101 illustrated based on FIGS. 5A to 5C and/or the application corresponding to the screen displayed in the first area 531.

According to an embodiment, forming of the second area 532 for displaying the list of the applications in the display area of the display 560 by the electronic device 101 may be related to the size of the display area. In an embodiment where the electronic device 101 has the flexible display 520 and the cover display 550 having the display area smaller than that of the flexible display 520, in the state where the cover display 550 having the display area of relatively small size is activated, the electronic device 101 may refrain from forming of the second area 532 and/or displaying the list of the applications based on the second area 532. Referring to FIG. 5C, the state 503 where the directions of the first surface 511-1 of the first housing 511 and the third surface 512-1 of the second housing 512 are substantially parallel is exemplarily illustrated. The state 503 may be included in the folded state of the electronic device 101. In the folded state, the flexible display 520 of the electronic device 101 may be occluded by the first housing 511 and the second housing 512. Another state distinct from the folded state where the flexible display 520 is occluded by the first housing 511 and the second housing 512 may be referred to as the unfolded state.

As shown in the state 503 of FIG. 5C, in the state where the angle between the first housing 511 of the electronic device 101, the folding axis of the folding housing 513, and the second housing 512 is substantially 0 °, the electronic device 101 may activate the cover display 550 among the flexible display 520 and the cover display 550. The electronic device 101 may display the screen based on the application executed by the processor 120 of the electronic device 101 based on the activated cover display 550. According to an embodiment, the electronic device 101 may refrain from displaying the list of the applications while the cover display 550 having a size less than the preset size for displaying the list of the applications is activated.

Referring to FIG. 5C, in the state 503 where the cover display 550 is activated, the electronic device 101 may display the screen based on execution of the application in the first area 531 of the display area of the cover display 550. In the third area 533 of the display area different from the first area 531, the electronic device 101 may display the visual objects for controlling the screen displayed in the first area 531, independently of displaying the list of the applications in the second area 532. The visual objects may include, for example, icons based on a navigation bar. The visual objects may include at least one of a first visual object (e.g., an application list button) for browsing the list of the applications being executed based on multitasking of the electronic device 101, a second visual object (e.g., a home button) for switching to a preset screen such as a home screen provided by a launcher application, or a third visual object (e.g., a back button) for selectively restoring screens sequentially provided through the first area 531.

As described above, according to an embodiment, the electronic device 101 may divide the display area into the first area 531 where at least one screen based on the execution of the at least one application is displayed, and another area (e.g., the second area 532, and/or the third area 533) different from the first area 531, based on the size of the display area. The electronic device 101 may form the second area 532 in which the list of the one or more applications installed in the electronic device 101 is displayed together with the first area 531 in the display area exceeding the preset size. Based on the list displayed in the second area 532, the electronic device 101 may support a function for controlling execution of the at least one application based on the first area 531.

Hereinafter, referring to FIGS. 6A to 6B, according to an embodiment, an example of the operation in which the electronic device 101 generates the second area 532 including the list of the applications in the display area will be described.

FIGS. 6A to 6B illustrate an example of an operation in which an electronic device 101 displays a screen based on execution of an application and a list of one or more applications on each of different areas of a display area, according to an embodiment. The electronic device 101 of FIGS. 6A to 6B may be an example of the electronic device 101 of FIGS. 5A to 5C. For example, the electronic device 101 and a flexible display 520 of FIGS. 5A to 5C may include the electronic device 101 and the flexible display 520 of FIGS. 6A to 6B. For example, the electronic device 101 and different states 601 and 602 of the electronic device 101 of FIGS. 6A to 6B may be related to the electronic device 101 and the state 501 of FIG. 5A.

Referring to FIG. 6A, in a state 600, according to an embodiment, the electronic device 101 may display a launcher screen 610 in a display area of a cover display 550. The launcher screen 610 may be displayed based on a preset application installed in a memory (e.g., a memory 130 of FIG. 5A) of the electronic device 101 such as a home application (or a launcher application). The launcher screen 610 may be displayed by the user's authentication (e.g., authentication based on biometric information such as fingerprint, iris, face, and/or voice, and/or personal information such as personal identification number (PIN), pattern, and/or password) performed on the boot-up and/or lock screen of electronic device 101. The electronic device 101 may display the launcher screen 610 in the display area of the flexible display 520 in response to an input indicating that a preset visual object (e.g., a home button) included in a navigation bar 620 is selected.

Referring to FIG. 6A, in the state 600, the electronic device 101 may enter the state 601 in response to an input indicating that the flexible display 520 different from the cover display 550 is activated. The input may be received based on a user's motion pivoting a folding axis in a housing of the electronic device 101. In the states 600 and 601, the electronic device 101 may control the cover display 550 or the flexible display 520 based on execution of the preset application related to the launcher screen 610.

Referring to FIG. 6A, in states 600 and 601 displaying the launcher screen 610, according to an embodiment, the electronic device 101 may display the list of the applications less than or equal to a preset number among a plurality of applications installed in the electronic device 101 in a portion 615 of the launcher screen 610. The list displayed in the portion 615 may be referred to as a hotseat. The electronic device 101 may form the list by displaying icons of applications pre-registered by the user in the portion 615.

Referring to FIG. 6A, the electronic device 101 according to an embodiment may display the navigation bar 620 including visual objects for controlling execution of the application. As described above, the navigation bar 620 may include the preset visual object for displaying the launcher screen 610. Based on an operating system of the electronic device 101, the navigation bar 620 may occupy a portion of a display area of a display (e.g., a display 560 of FIG. 5A) of the electronic device 101 such as the cover display 550 and/or the flexible display 520. The electronic device 101 may change a location and/or form of the navigation bar 620 based on the application executed by the electronic device 101 and/or the input received from the user of the electronic device 101.

Referring to FIG. 6A, in the state 601 where the launcher screen 610 is displayed, according to an embodiment, the electronic device 101 may receive an input indicating that the application is executed. The input may be identified based on a gesture for selecting the visual object (e.g., the icon) which is displayed in the launcher screen 610 and representing the specific application. In response to the input, the electronic device 101 may enter the state 602 in which the application selected by the input is executed from the state 601 of FIG. 6A. In the state 602 of FIG. 6A, according to an embodiment, the electronic device 101 may execute the application selected by the input. The electronic device 101 may display the screen based on the execution of the application in a first area 531 of the display area of the flexible display 520. In a second area 532 of the display area different from the first area 531, the electronic device 101 may display the navigation bar 620 for controlling the screen displayed in the first area 531, and the list of the one or more applications installed in the electronic device 101.

According to an embodiment, the electronic device 101 may identify whether to display the second area 532 based on an application programming interface (API) called by the application providing the screen to the first area 531, and/or at least one parameter. For example, the electronic device 101 may identify, a request generated based on the application and for stopping display of the second area 532, based on the preset API called based on the execution of the application. Based on the request, the electronic device 101 may at least temporarily stop displaying the second area 532 in the display area. In the state where the displaying the second area 532 is at least temporarily stopped, the electronic device 101 may display the screen based on the execution of the application on the entire display area. In the above state where the displaying the second area 532 is at least temporarily stopped, the electronic device 101 may resume the display of the second area 532 in response to a preset gesture related to a specific edge (e.g., the second edge 520-2 corresponding to the second area 532) of the display area of the flexible display 520. For example, the preset gesture may include a swipe gesture (e.g., a swipe gesture performed by a preset number of fingertips) initiated from the specific edge, and/or a long-touch gesture that touches a portion of the display area adjacent to the specific edge exceeding a preset period (e.g., a period of 1.5 seconds or more). In the above example, before identifying the request, the electronic device 101 may divide the display area of the flexible display 520 into the first area 531 and the second area 532.

In the state 602 of FIG. 6A, according to an embodiment, the electronic device 101 may identify the list of the applications to be displayed in the second area 532 by selecting at least one of the plurality of applications stored in the memory (e.g., the memory 130 of FIG. 5A) based on the application generating the screen to be displayed in the first area 531. For example, the electronic device 101 may obtain an identifier (e.g., a package name) of the application executed based on the first area 531, and/or the list of the applications to be displayed in the second area 532, based on the category of the application.

For example, in the exemplary state 602 where the screen of the first area 531 is displayed based on the execution of the messenger application, the electronic device 101 may display visual objects representing other applications executed adjacent to the messenger application in a time domain as items of the list of the applications in the second area 532. For example, while the electronic device 101 displays a screen based on the execution of the camera application in the first area 531, The electronic device 101 may display the visual object (e.g., the icon) corresponding to another application (e.g., a gallery application for browsing an image and/or a video) related to the camera application in the second area 532. According to an embodiment, the electronic device 101 may add other applications related to the specific application displayed in the first area 531 to the list of the applications displayed in the second area 532, based on the history information in which one or more applications have been executed by the user.

Determining the list of the applications displayed by the electronic device 101 in the second area 532 may be related to at least one of at least one application executed in the first area 531, the flexible display 520, and/or the form of the electronic device 101. For example, based on the state of the flexible display 520 bent by a folding housing (e.g., a folding housing 513 of FIGS. 5A to 5C), the electronic device 101 may select the at least one application to be included in the list of the applications from among the plurality of applications. For example, as shown in the state 502 of FIG. 5B, in a sub-unfolded state, the electronic device 101 may add one or more frequently executed applications in the sub-unfolded state to the list of the applications displayed through the second area 532.

According to an embodiment, the operation of obtaining the list of the applications displayed by the electronic device 101 through the second area 532 is not limited to the above-described examples. For example, the electronic device 101 may obtain the list of the applications to be displayed through the second area 532 based on the list of the applications displayed in the hotseat and/or an edge panel. For example, the electronic device 101 may identify the one or more applications included in the hotseat and/or edge panel, based on a database of the launcher application. In an embodiment, the electronic device 101 may add the one or more applications included in the edge panel to the list of the applications displayed through the second area 532.

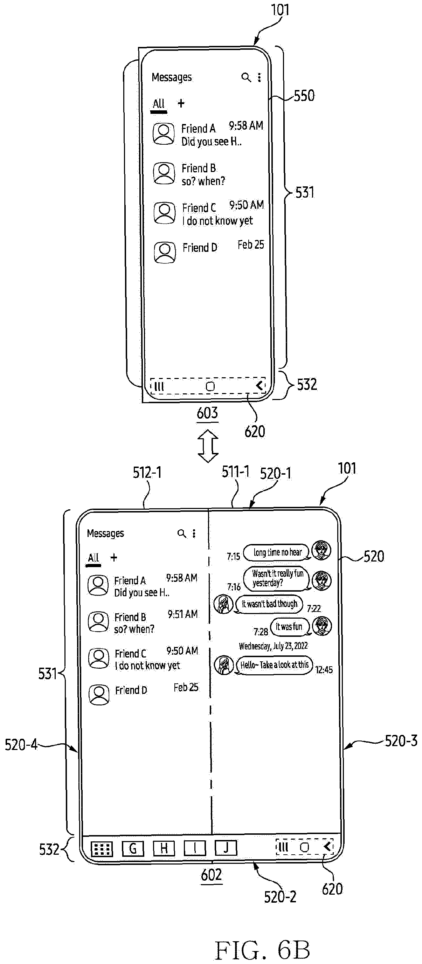

Referring to FIG. 6B, a state 603 where the electronic device 101 has a folded state and displays another screen different from the launcher screen 610 based on the messenger application is illustrated. In the state 603, the electronic device 101 may divide the cover display 550 into the first area 531 in which the other screen based on the messenger application is displayed and the second area 532 in which the navigation bar 620 is displayed. The electronic device 101 may refrain from displaying the other screen through the cover display 550 in response to an input indicating that the flexible display 520 is displayed based on the folding axis. In response to the input, the electronic device 101 may display the other screen in the first area 531 of the flexible display 520. In response to the input, the electronic device 101 may display the list of the applications in the second area 532 of the flexible display 520. In an embodiment, the list of the applications displayed in the second area 532 in the state 602 may match the list of the applications provided by the launcher application of the electronic device 101, such as the hotseat.

As described above, according to an embodiment, the electronic device 101 may divide the display area into the first area 531 where the other screen is displayed, the list of the applications, and/or the second area 532 where the navigation bar 620 is displayed, in the state 602 displaying another screen different from the launcher screen 610. The second area 532 may extend along the specific edge (e.g., the second edge 520-2) of the electronic device 101. In the second area 532, in another portion other than the portion where the navigation bar 620 is displayed, the electronic device 101 may display one or more visual objects (e.g., one or more icons) representing the one or more applications included in the list of the applications. Hereinafter, exemplary layouts of the list of the applications displayed by the electronic device 101 in the second area 532 according to an embodiment will be described with reference to FIGS. 7A to 7B.

FIGS. 7A to 7B illustrate an example of a list of applications displayed by an electronic device 101 in a second area of a display area, according to an embodiment. The electronic device 101 of FIGS. 7A to 7B may be an example of the electronic device 101 of FIGS. 5A to 5C. For example, the electronic device 101 and a flexible display 520 of FIGS. 5A to 5C may include each of the electronic device 101 and the flexible display 520 of FIGS. 7A to 7B. For example, the second area may include a second area 532 of FIGS. 5A to 5C.

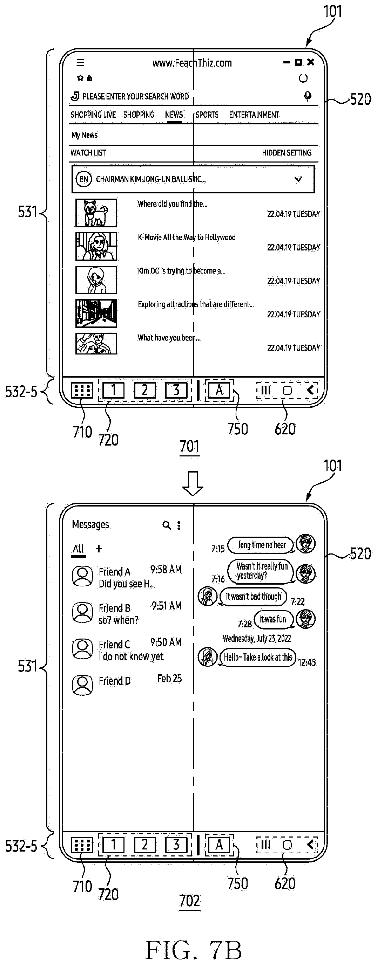

Referring to FIG. 7, in a state 501 of FIG. 5A, according to an embodiment, different layouts 532-1, 532-2, 532-3, 532-4, and 532-5 of visual objects displayed by the electronic device 101 in the second area 532 of the display area of the flexible display 520 are illustrated. The layouts 532-1, 532-2, 532-3, 532-4, and 532-5 may be exemplary arrangements of the visual objects displayed in the second area 532 by the electronic device 101. Displaying the visual objects in the second area 532 by the electronic device 101 is not limited to the layouts 532-1, 532-2, 532-3, 532-4, and 532-5 in FIG. 7.

Referring to the layouts 532-1, 532-2, 532-3, 532-4, and 532-5 of FIG. 7A, according to an embodiment, the electronic device 101 may display a visual object 710 for browsing entire applications installed in the electronic device 101, in the second area 532. In response to an input indicating that the visual object 710 is selected, the electronic device 101 may display a visual object 730 such as a pop-up window for browsing the entire applications in a first area 531 different from the second area 532. In the visual object 730, the electronic device 101 may display a visual object 732 such as a text box for receiving a keyword for searching the applications. In the portion 734 of the visual object 730, the electronic device 101 may display icons of the applications. The icons displayed in the portion 734 may correspond to a single application or represent a group (e.g., a folder) formed by one or more applications. In the visual object 730, the electronic device 101 may display a visual object 736 for scrolling the icons displayed in the portion 734.

Referring to the layouts 532-1, 532-2, and 532-5 of FIG. 7A, the electronic device 101 may display a navigation bar 620 in the second area 532. Referring to the layouts 532-1, 532-2, 532-3, 532-4, and 532-5, according to an embodiment, the electronic device 101 may display a list 720 of the applications in the second area 532. In the list 720, the electronic device 101 may display one or more icons corresponding to the one or more applications based on the application corresponding to the screen in the first area 531, and/or a form of the flexible display 520. Referring to the layout 532-5, the electronic device 101 may display a list 750 of at least one recently executed application by the electronic device 101 together with the list 720 of applications in the second area 532. The list 720 and/or the one or more icons displayed in the second area 532 based on the list 720 may be referred to as a task bar. The embodiment is not limited thereto, and the second area 532 formed along one edge (e.g., the second edge 520-2) of the display of the electronic device 101 such as the flexible display 520, may be referred to as the task bar.

In the exemplary state of FIG. 7A where the second area 532 of the electronic device 101 is formed along the second edge 520-2 of the flexible display 520, the electronic device 101 may display the one or more icons included in the list 720 along the direction of the second edge 520-2. For example, the visual objects corresponding to a plurality of applications included in the list 720 may be arranged along the direction of the second edge 520-2. At least one visual object based on the list 720 and the navigation bar 620 may be displayed in different portions of the second area 532. Referring to the layouts 532-1 and 532-2 of FIG. 7A, the order in which the electronic device 101 displays the navigation bar 620 and the list 720 in the second area 532 may vary according to embodiments. Although an embodiment in which five icons are included in the list 720 is illustrated, the embodiment is not limited thereto. According to an embodiment, the electronic device 101 may scroll the icons in the list 720, in response to a drag gesture and/or a swipe gesture performed along a direction (e.g., in an embodiment of FIG. 7A, the direction of the second edge 520-2) in which the icons are arranged in the list 720.

Referring to the layout 532-3 of FIG. 7A, the electronic device 101 may refrain from displaying the navigation bar 620 in the second area 532. For example, in case that displaying the navigation bar 620 is disabled by the user, the electronic device 101 may refrain from displaying the navigation bar 620 in the second area 532 like the layout 532-3. Referring to the layout 532-4 of FIG. 7A, based on an input indicating that the design of the navigation bar 620 is adjusted, the electronic device 101 may replace the navigation bar 620 including the one or more icons (e.g., a home button) with a visual object 740. The visual object 740 may have a form of a line extending along the direction of the second area 532. Based on a gesture of dragging the visual object 740 along a preset direction (e.g., a direction perpendicular to the second edge 520-2 adjacent to the visual object 740), the electronic device 101 may enter a state (e.g., a state 601 of FIG. 6A) for displaying a home screen (e.g., a launcher screen 610 of FIG. 6A). The visual object 740 may be displayed by the electronic device 101 to guide the display of the navigation bar 620, like a gesture hint.

Referring to FIG. 7B, according to an embodiment, exemplary states 701 and 702 in which the second area 532 is formed based on the layout 532-5 of FIG. 7A are illustrated. According to an embodiment, the electronic device 101 may display the list 720 of the applications in the second area 532 and/or the list 750 of at least one application recently executed by the electronic device 101. Based on an input indicating that a specific application is selected in the list (e.g., a list in the launcher screen) displayed in the first area 531, the electronic device 101 may add an icon representing the specific application to the list 750 while controlling the first area 531 based on the specific application selected by the input.

According to an embodiment, the electronic device 101 may switch the screen displayed in the first area 531 to the specific screen provided from the specific application selected by the input, based on an input identified through at least one of the lists 720 and 750. According to an embodiment, the electronic device 101 may determine whether to add an icon representing the application selected by the input, to another list different from the list in which the input is received, among the lists 720 and 750, based on an input indicating that an application is selected in the lists 720 and 750.

For example, in response to the input indicating that the specific application is selected in the application list 720, the electronic device 101 may display a specific screen corresponding to the specific application selected by the input in the first area 531. In the above example, in a state where the specific screen is displayed in the first area 531 based on the input, the electronic device 101 may refrain from adding to the list 750 of the second area 532-5. Independently of displaying applications executed by the electronic device 101 in the list 750, the electronic device 101 may not add the specific application corresponding to the specific screen displayed in the first area 531 to the list 750. Since the electronic device 101 does not add an icon representing the specific application selected based on the list 720 to the list 750, a case in which all of the lists 720 and 750 simultaneously include the icon may be prevented. Since the case is prevented, the electronic device 101 may more efficiently utilize the second area 532 of the display area.

As described above, according to an embodiment, the electronic device 101 may display one or more visual objects in the second area 532 based on different layouts 532-1, 532-2, 532-3, and 532-4. The layouts 532-1, 532-2, 532-3, and 532-4 may be selected by the user of electronic device 101 or may be controlled by the one or more applications executed in the electronic device 101. According to an embodiment, the electronic device 101 may switch the screen displayed in the first area 531, or may receive an input indicating that the screen is added to the first area 531, based on the list 720 in the second area 532. According to an embodiment, the electronic device 101 may change the display of the second area 532 and the visual object (e.g., the visual object 730) displayed based on the second area 532, based on the form of the flexible display 520. Hereinafter, an example of an operation performed, based on the shape of the flexible display 520, by the electronic device 101 according to an embodiment will be described with reference to FIGS. 8A to 8B.

FIGS. 8A to 8B illustrate an example of a screen displayed by an electronic device 101 based on a form of a flexible display 520, according to an embodiment. The electronic device 101 of FIGS. 8A to 8B may be an example of the electronic device 101 of FIGS. 5A to 5C. For example, the electronic device 101 and the flexible display 520 of FIGS. 5A to 5C may include each of the electronic device 101 and the flexible display 520 of FIGS. 8A to 8B. Hereinafter, as in a state 502 of FIG. 5B, in a state where at least a portion of the flexible display 520 is bent, an operation of the electronic device 101 related to the at least a portion will be described with reference to FIGS. 8A to 8B.

According to an embodiment, the electronic device 101 may adjust a location and/or direction of a second area 532 including a list of applications based on an angle between a first housing 511, a folding axis in a folding housing 513, and a second housing 512. Referring to FIG. 8A, in response to identifying the angle included in a preset angle range (e.g., an angle range between 80 ° and 130 °) different from a straight angle, the electronic device 101 may display the second area 532 based on another edge different from an edge (e.g., a first edge 520-1 and/or a second edge 520-2) bent by the form of the flexible display 520. For example, the electronic device 101, among edges of portions (e.g., a second portion 542 to a third portion 543) different from the bent first portion 541 of the flexible display 520, may be included in the list 720 along an edge parallelly separated from the folding axis of the folding housing 513 and may display at least one icon representing at least one application. The electronic device 101 may pivot the screen in the display area of the flexible display 520 to adjust the edge adjacent to the second area 532 based on the change in the angle. Among the four edges (e.g., the first edge 520-1 to the fourth edge 520-4) of the flexible display 520, the electronic device 101 may identify one edge corresponding to the lower end of the flexible display 520 based on the direction of gravity acceleration and/or the posture of the electronic device 101. Referring to FIG. 8A, based on the direction of the gravity acceleration applied to the electronic device 101, the electronic device 101 may display the second area 532 on a third edge 520-3. In a state of FIG. 8A, the direction of the first housing 511 including the third edge 520-3 may be parallel to the direction of the gravity acceleration applied to the electronic device 101.

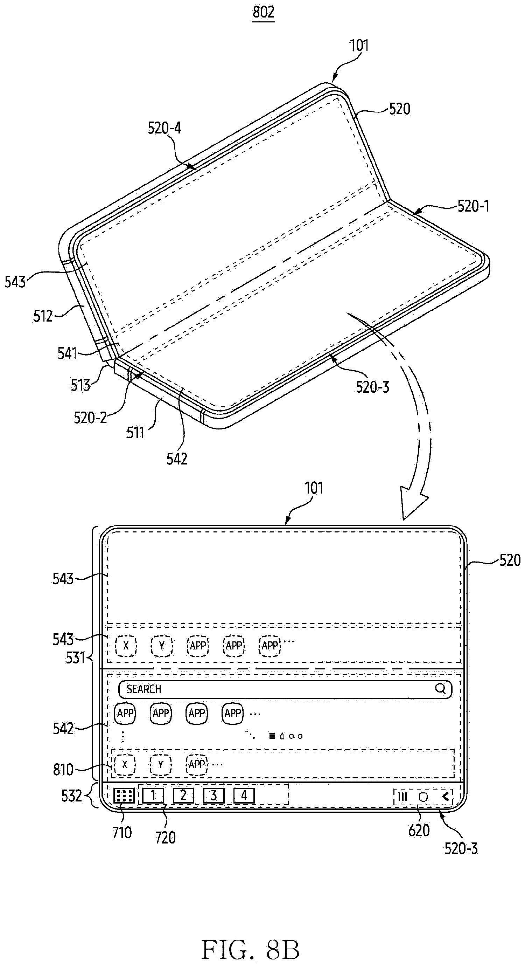

Referring to FIG. 8A, according to an embodiment, the electronic device 101 may identify different portions (e.g., the first portion 541 to the third portion 543) of the flexible display 520, distinguished by the form of the electronic device 101 and/or the flexible display 520. In the state 801 of FIG. 8A, the first portion 541 of the flexible display 520 may be a portion of the flexible display 520 bent by the form of the electronic device 101 and/or the flexible display 520. In the state of FIG. 8, the second portion 542 to the third portion 543 of the flexible display 520 is different portions of the flexible display 520 distinguished by the first portion 541, and may have a form of a two-dimensional flat surface.

In an embodiment in which the electronic device 101 detects an external object (e.g., a user's finger) touching the flexible display 520, difficulty level for the user to touch a visual object displayed through the first portion 541 may increase, as the angle between the first housing 511, the folding axis in the folding housing 513, and the second housing 512 decreases. According to an embodiment, to compensate for the difficulty level, the electronic device 101 may move at least one visual object displayed in the first portion 541 to another portion (e.g., the second portion 542 to the third portion 543) different from the first portion 541.

Referring to FIG. 8A, according to an embodiment, the electronic device 101 may move the at least one visual object (e.g., an 'X' icon with a boundary line of dashed line, and/or a 'Y' icon) in the first portion 541 to a portion 810 of the second portion 542 where the second area 532 is displayed, among icons displayed in the first area 531. The icons displayed in the first area 531 may be provided by a preset application (e.g., a launcher application) of the electronic device 101 and may be included in the list of the applications installed in the electronic device 101.

The electronic device 101 may display the at least one visual object related to the first portion 541, in the portion 810 adjacent to the second area 532, in the second portion 542. Since the at least one visual object in the first portion 541 is moved to the portion 810 in the second portion 542, the electronic device 101 may support control of the at least one visual object based on the second portion 542 having a form of the flat surface. Displaying, by the electronic device 101, the visual object of the first portion 541 different from the second portion 542 by using the portion 810 in the second portion 542 may be performed while the form of the first portion 541 of the flexible display 520 is bent. For example, based on identifying that the form of the first portion 541 is changed to the form of the flat surface as the form of the first portion 541 is switched to the unfolded state, the electronic device 101 may move the at least one visual object displayed in the portion 810 to the first portion 541.

According to an embodiment, as in the state 802 of FIG. 8B, the electronic device 101 may move the at least one visual object displayed on a specific portion among portions (e.g., the second portion 542 and the third portion 543) of the flexible display 520 different from the first portion 541 to another portion, while the form of the first portion 541 is bent. For example, the electronic device 101 may move the at least one visual object displayed on the first portion 541 and the third portion 543, to the second portion 542 of the flexible display 520 disposed on the first housing 511 parallel to the direction of the gravity acceleration, among the first housing 511 and the second housing 512 of the electronic device 101.

Hereinafter, an example of an operation of receiving an input indicating that the electronic device 101 changes the list 720 in the second area 532 according to an embodiment will be described with reference to FIGS. 9A to 9B.

FIGS. 9A to 9B illustrate an example of an operation performed by an electronic device 101 based on an input received through a second area 532 of a display area, according to an embodiment. The electronic device 101 of FIGS. 9A to 9B may be an example of the electronic device 101 of FIGS. 5A to 5C. For example, the electronic device 101 and a flexible display 520 of FIGS. 5A to 5C may include each of the electronic device 101 and the flexible display 520 of FIGS. 9A to 9B. Hereinafter, an operation of the electronic device 101 related to an input indicating that a list 720 in the second area 532 is changed based on an unfolded state including a state 501 of FIG. 5A will be described. The embodiment is not limited thereto, and in a sub-unfolded state as in a state 502 of FIG. 5B, the electronic device 101 may operate similarly.

Referring to FIG. 9A, in a state 901, according to an embodiment, the electronic device 101 may divide the display area of the flexible display 520 into a first area 531 and the second area 532 in which at least one visual object for controlling at least one application executed based on the first area 531 is displayed. In the second area 532, the electronic device 101 may display at least one of a navigation bar 620, a visual object 710 for displaying a list of entire applications installed in the electronic device 101, or the list 720 of applications, based on the operations described above with reference to FIGS. 7A to 7B. In the state 901 of FIG. 9A, in response to an input indicating that the visual object 710 is selected, the electronic device 101 may display a visual object 730 for browsing the entire applications in the first area 531.

According to an embodiment, the electronic device 101 may display one or more visual objects (e.g., icons) representing one or more applications based on at least one application executed based on the first area 531 or at least one of the form of the flexible display 520, in the list 720 of the second area 532. According to an embodiment, the electronic device 101 may receive an input for changing the list 720 from a user. For example, the electronic device 101 may identify a gesture of dragging an icon (e.g., an 'A' icon) representing a specific application in the visual object 730 of the first area 531, into the list 720 of the second area 532 along a path 910. The electronic device 101 that detects the gesture may identify an input indicating that the specific application is added to the list 720.

Referring to FIG. 9A, in the state 901, in response to an input indicating that the specific application is added, a state 902 where the electronic device 101 adds an icon representing the specific application to the list 720 is exemplarily illustrated. According to an embodiment, the electronic device 101 may add the icon (e.g., the 'A' icon) representing an application selected by the input, to the list 720 based on the input. A location where the icon is added in the list 720 may be related to a terminal point of the gesture related to the input. Referring to FIG. 9A, based on identifying second icon (e.g., the 'A' icon) dragged between first icons (e.g., a '3' icon and a '4' icon) along the path 910, the electronic device 101 may display the second icon between the first icons in the list 720.

According to an embodiment, the visual object displayed by the electronic device 101 through the list 720 is not limited to the icon for executing the specific application. The electronic device 101 may display the visual object representing a group (e.g., a folder) of the one or more applications in the list 720. In response to the input indicating that the visual object is selected, the electronic device 101 may display a pop-up window (e.g., the visual object 730) for browsing the one or more applications included in the group in the first area 531. According to an embodiment, the electronic device 101 may execute a plurality of applications substantially simultaneously by using a single visual object (e.g., the icon) included in the list 720.

According to an embodiment, the electronic device 101 may receive an input indicating that the visual object in the list 720 of FIG. 9A is removed. The input may be received based on a gesture (e.g., a long-touch gesture) that touches the visual object in the list 720 exceeding a preset period. The electronic device 101 receiving the gesture may provide the user with an option for removing the visual object by using a menu related to the visual object. In response to an input indicating that the option is selected, the electronic device 101 may remove the visual object selected by the gesture from the list 720.

Referring to FIG. 9B, in the state 903, according to an embodiment, the electronic device 101 may display different screens 931 and 932 based on the execution of different applications (e.g., application A, and application B) in the first area 531. In the state 903 in which the screens 931 and 932 are displayed in the first area 531, the electronic device 101 may display a visual object 620-1 for performing a function corresponding to a specific visual object (e.g., a back button) of the navigation bar 620 for each of the different screens 931 and 932. For example, the visual object 620-1 may be related to a function for switching the screen 931 adjacent to the visual object 620-1 among the screens 931 and 932. Meanwhile, the visual object 620-1 may be related to a function for controlling (e.g., switching) a specific screen focused by the user among the screens 931 and 932.

According to an embodiment, the electronic device 101 may receive an input indicating that the location and/or size of at least one of the screens 931 and 932 is adjusted based on a boundary line 930 of the screens 931 and 932. For example, the electronic device 101 may adjust the size of at least one of the screens 931 and 932 based on a gesture dragging the boundary line 930. Referring to FIG. 9B, the electronic device 101 may display a menu 933 by overlapping the boundary line 930 based on a gesture of touching and/or clicking the boundary line 930. The electronic device 101 may provide an option for storing the state 903, by using a visual object 934 (e.g., a button), in the menu 933.

Referring to FIG. 9B, in response to an input indicating that the visual object 934 is selected, the electronic device 101 may display a visual object 935 such as the pop-up window. The visual object 935 may be displayed as an overlap on at least one of the screens 931 and 932 displayed in the first area 531. Through the visual object 935, the electronic device 101 may provide options for selecting a location where the visual object for reproducing the state 903 is to be displayed. The options displayed in the visual object 935 may include at least one of a home screen (e.g., a launcher screen 610 of FIG. 6A), a preset area such as an edge panel, and/or the list 720 in the second area 532. For example, the electronic device 101 may display a visual object 936 corresponding to the option for adding the visual object for reproducing the state 903 in the list 720 of the second area 532, in the visual object 935. The visual object 936 may include preset text (e.g., "Task bar") for guiding the option.

Referring to a state 904 of FIG. 9B, according to an embodiment, in response to an input indicating that the visual object 936 is selected, the electronic device 101 may add a visual object 940 for reproducing the state 903 that simultaneously displays the screens 931 and 932 based on the execution of a plurality of applications to the list 720 of the second area 532. The visual object 940 may be formed by a combination of icons of applications corresponding to each of the screens 931 and 932. In the state 904, the electronic device 101 may display the screens 931 and 932 displayed in the first area 531 again in the state 903 in the first area 531, based on an input indicating that the visual object 940 in the list 720 is selected. In response to the input, the electronic device 101 may execute the applications corresponding to the screens 931 and 932.

As described above, according to an embodiment, the electronic device 101 may display at least one of the icon for executing the application, the icon corresponding to the group (e.g., the folder) of the one or more applications, or the icon for entering the state 903 displaying a plurality of screens 931 and 932 based on multitasking, by using the list 720 in the second area 532. In response to an input indicating that an icon displayed through the list 720 is selected, the electronic device 101 may switch a screen displayed in the first area 531 different from the second area 532.

According to an embodiment, the electronic device 101 may change the arrangement of one or more screens displayed in the first area 531, based on the visual object displayed in the list 720. Hereinafter, an example of an operation in which the electronic device 101 according to an embodiment changes the arrangement of one or more screens displayed in the first area 531 based on an input related to the visual object in the list 720 will be described with reference to FIGS. 9A to 9B, 10A to 10B, and/or 11.

FIGS. 10A to 10B illustrate an example of an operation in which an electronic device 101 adjusts an arrangement of screens 101 and 1012 corresponding to each of a plurality of applications based on a form of a flexible display 520, according to an embodiment. The electronic device 101 of FIGS. 10A to 10B may be an example of the electronic device 101 of FIGS. 5A to 5C. For example, the electronic device 101 and the flexible display 520 of FIGS. 5A to 5C may include each of the electronic device 101 and the flexible display 520 of FIGS. 10A to 10B.

Referring to FIG. 10A, according to an embodiment, an exemplary state 1001 in which the electronic device 101 divides a display area of the flexible display 520 into a first area 531 and a second area 532 based on an unfolded state is illustrated. In the state 1001, it is assumed that the electronic device 101 displays a first screen based on execution of a first application (e.g., an application A) in the first area 531. The electronic device 101 may display a list of the first application executed based on the first area 531 and applications based on a form (e.g., a form of the electronic device 101 in the unfolded state) of the electronic device 101, in the second area 532.

According to an embodiment, the electronic device 101 may switch the first screen displayed on the first area 531 to another screen, based on a list of the second area 532. For example, based on a gesture of touching a visual object (e.g., a '3' icon) included in the list of the second area 532 and representing the second application, the electronic device 101 may replace the first screen displayed in the first area 531 with a second screen based on execution of the second application. According to an embodiment, the electronic device 101 may receive an input indicating that the first area 531 is divided by using screens based on execution of a plurality of applications, based on the list of the second area 532. In the state 1001 of FIG. 10A, the electronic device 101 may receive the input, based on a gesture of dragging the visual object (e.g., the '3' icon) included in the list of the second area 532 and representing the second application along the path 1010. According to an embodiment, the electronic device 101 may change the arrangement of the first screen based on the execution of the first application in the first area 531 and the second screen based on the execution of the second application selected by the input, based on a terminal point of the gesture.

Referring to FIG. 10A, the electronic device 101 may adjust the arrangement of the first screen and the second screen based on a specific portion including the terminal point of the gesture among different portions 531-1, 531-2, 531-3, 531-4, and 531-5 of the first area 531. In the list of the second area 532, the electronic device 101 may display a visual object (e.g., a boundary line of the portions 531-1, 531-2, 531-3, 531-4, and 531-5) for guiding the portions 531-1, 531-2, 531-3, 531-4, and 531-5, based on the gesture of dragging the visual object representing the second application to a point in the portion 531-2.

For example, in case that the terminal point of the gesture is included in the portion 531-2, the electronic device 101 may include a first screen 1011 and a second screen 1012 so that the second screen 1012 includes a portion 531-2, as a state 1002 of FIG. 10A. In case that the terminal point of the gesture is included in the portion 531-2, the electronic device 101 may sequentially display the second screen 1012 and the first screen 1011 based on a second edge 520-2 adjacent to the portion 531-2. For example, in case that the terminal point of the gesture is included in the portion 531-1, the electronic device 101 may sequentially display the second screen and the first screen from a first edge 520-1 adjacent to the portion 531-1. For example, in case that the terminal point of the gesture is included in the portion 531-4, the electronic device 101 may sequentially display the second screen and the first screen from a fourth edge 520-4 adjacent to the portion 531-4. For example, in case that the terminal point of the gesture is included in the portion 531-3, the electronic device 101 may sequentially display the second screen and the first screen from a third edge 520-3 adjacent to the portion 531-3. The portion 531-5, separated from, the first edge 520-1 to the fourth edge 520-4, may correspond to a preset arrangement for overlapping and displaying screens based on the execution of a plurality of applications, such as a pop-up window. For example, in case that the terminal point of the gesture is included in the portion 531-5, the electronic device 101 may display the second screen 1012 as an overlap on the first screen 1011 in the first area 531, as in a state 1003 of FIG. 10A.

Referring to FIG. 10A, according to an embodiment, the electronic device 101 may display different screens (e.g., the first screen 1011 to the second screen 1012) based on the execution of different applications in the first area 531, based on the gesture of dragging the visual object of the list in the second area 532 to the first area 531 in the unfolded state (e.g., the state 1001). The electronic device 101 may select an arrangement of the screens by comparing the terminal point of the gesture and the portions 531-2, 531-3, 531-4, and 531-5 formed in the first area 531. According to an embodiment, the form of the portions 531-1, 531-2, 531-3, 531-4, and 531-5 compared by the electronic device 101 with the terminal point of the gesture is not limited to the embodiment of FIG. 5A. For example, the form of the portions 531-1, 531-2, 531-3, 531-4, and 531-5 may be adjusted based on the form of the electronic device 101 and/or the flexible display 520.

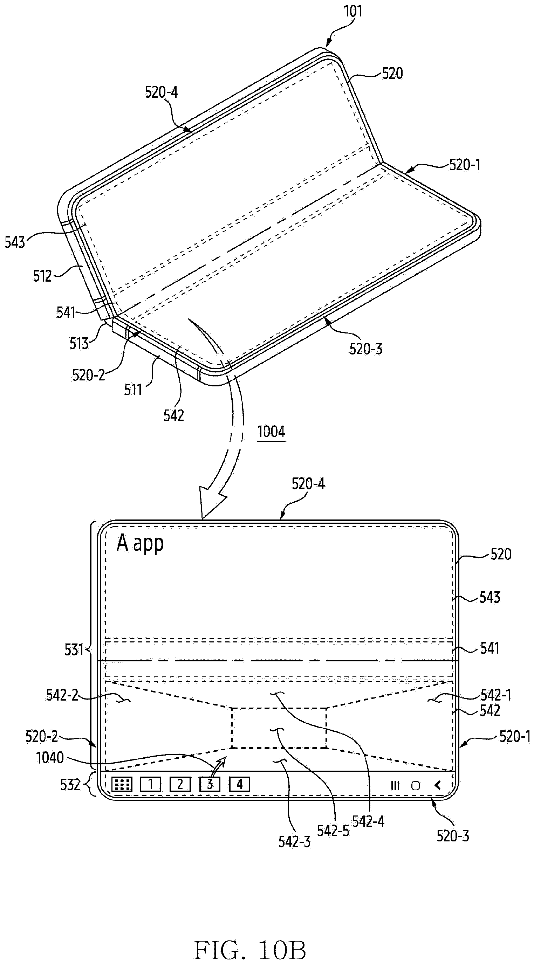

Referring to FIG. 10B, according to an embodiment, an exemplary state 1004 in which the electronic device 101 receives a gesture dragged along a path 1040 in a sub-unfolded state such as a state 502 of FIG. 5B is illustrated. In the state 1004, the electronic device 101 may display the first screen based on the execution of the first application, in the first area 531. In a second portion 542 different from a first portion 541 of the flexible display 520 bent by a folding housing 513, the electronic device 101 may form the second area 532 including a list of applications.

According to an embodiment, the electronic device 101 may receive an input indicating that at least one second application is selected from the list based on a gesture performed in the second portion 542 on which the second area 532 is formed. Based on the input, the electronic device 101 may display at least one second screen based on the execution of the at least one second application together with the first screen. The layout in which the first screen and the at least one second screen are displayed in the first area 531 may be selected from among different layouts by the input. In the state 1004 of FIG. 10B, according to an embodiment, the electronic device 101 may select the arrangement of the first screen provided by the first application executed based on the first area 531, and the second screen provided by the second application corresponding to the icon disposed on the viewpoint of the first gesture, based on the portions 542-1, 542-2, 542-3, 542-4, and 542-5 in the second portion 542 where the second area 532 is displayed. In the state 1004, based on the gesture, the electronic device 101 may display the visual object (e.g., the boundary line of portions 542-1, 542-2, 542-3, 542-4, and 542-5) for guiding portions 542-1, 542-2, 542-3, 542-4, and 542-5.

In the state 1004, the arrangements of the screens corresponding to the portions 542-1, 542-2, 542-3, 542-4, and 542-5 compared to the terminal points of the gesture dragged along the path 1040 may correspond to each of the arrangements of the screens corresponding to the portions 531-1, 531-2, 531-3, 531-5 of FIG. 5A. For example, in case that the terminal point of the gesture is included in the portion 542-3, the electronic device 101 may display a screen based on the execution of the application selected by the gesture in the second portion 542 of the flexible display 520 corresponding to the portion 542-3, similar to the arrangement of the first screen 1011 and the second screen 101 in the state 1002 of FIG. 10A. For example, in case that the terminal point of the gesture is included in the portion 542-4, the electronic device 101 may display a screen based on the execution of the application selected by the gesture in a portion of the flexible display 520 including the fourth edge 520-4. For example, in case that the terminal point of the gesture is included in the portion 542-2, the electronic device 101 may display the screen in a portion of the first area 531 adjacent to the second edge 520-2. For example, in case that the terminal point of the gesture is included in the portion 542-1, the electronic device 101 may display the screen in a portion of the first area 531 adjacent to the first edge 520-1. For example, in case that the terminal point of the gesture is included in the portion 542-5, The electronic device 101 may display a screen based on the execution of the application selected by the gesture in a portion of the first area 531 separated from edges (e.g., the first edge 520-1 to the fourth edge 520-4).

As described above, according to an embodiment, the electronic device 101 may identify an input indicating that an icon representing the second application is dragged to the first area 531, in the list of the applications included in the second area 532, in the state where the first screen based on the execution of the first application is displayed in the first area 531. The electronic device 101 may adjust the second screen based on the execution of the second application and the arrangement of the first screen, based on the location of the icon dragged based on the input. In the unfolded state as in state 1001 of FIG. 10A, the electronic device 101 may adjust the arrangement based on the portions 531-1, 531-2, 531-3, 531-4, and 531-5 in the first area 531 formed up to the first portion 543. Each of the portions 531-1, 531-2, 531-3, 531-4, and 531-5 may be selected based on the terminal point to which the icon is dragged. The portions 531-1, 531-2, 531-3, 531-4, and 531-5 may correspond to different arrangements of screens.

According to an embodiment, the electronic device 101 may adjust the arrangement of screens displayed in the first area 531 formed across the first portion 541, based on a gesture performed in the second portion 542 different from the first portion 541, while the first portion 541 of the flexible display 520 is bent, as in the state 1004 of FIG. 10B. For example, based on the drag gesture facing any one of the portions 542-1, 542-2, 542-3, 542-4, and 542-5 in the second portion 542 from the list of the second area 532 in the second portion 542, the electronic device 101 may identify the second application corresponding to the second screen to be displayed together with the first screen displayed through the first area 531, and the arrangement of the first screen and the second screen. While the first portion 541 of the flexible display 520 is bent, the electronic device 101 may receive an input for adjusting the arrangement through a specific portion (e.g., the second portion 542) of different portions (e.g., the second portion 542 and/or the third portion 543) of the flexible display 520 distinguished by the bent first portion 541.

An embodiment of displaying the different screens in the first area 531 based on the list of the applications in the second area 532 has been described, but the embodiment is not limited thereto. For example, the electronic device 101 may receive a gesture for dragging the specific application in the visual object 730 displayed based on the selection of the visual object 710 of FIGS. 7A to 7B and including the list of the entire applications installed in the electronic device 101. The electronic device 101 may select the arrangement of screen executed in the first area 531 and another screen based on the execution of the specific application by comparing the terminal point of the gesture with portions (e.g., in the unfolded state, portions 531-1, 531-2, 531-3, 531-4, 531-5), or in the sub-unfolded state, portions 542-1, 542 -2, 542-3, 542-4, 542-5)) distinguished by the form of the electronic device 101.

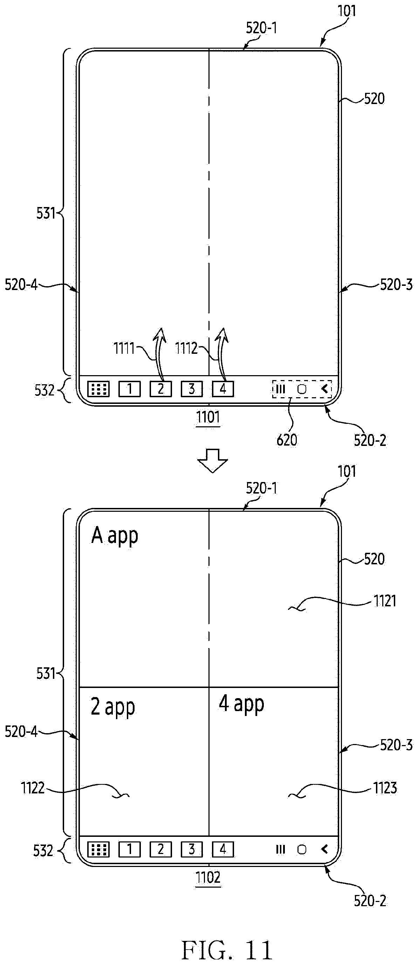

Although an embodiment in which the electronic device 101 displays two screens based on execution of two applications in the first area 531 has been described, the embodiment is not limited thereto. Hereinafter, an example of an operation performed based on an input indicating that the electronic device 101 selects two applications in the list of the applications in the second area 532 according to an embodiment will be described with reference to FIG. 11.

FIG. 11 illustrates an example of an operation in which an electronic device 101 adjusts an arrangement of screens 1121, 1122, and 1123 corresponding to each of a plurality of applications based on an input received through a second area 532 of a display area, according to an embodiment. The electronic device 101 of FIG. 11 may be an example of the electronic device 101 of FIGS. 5A to 5C. For example, the electronic device 101 and a flexible display 520 of FIGS. 5A to 5C may include each of the electronic device 101 and the flexible display 520 of FIG. 11.

Referring to FIG. 11, according to an embodiment, an exemplary state 1101 in which the electronic device 101 displays a first screen based on the execution of the first application in the first area 531 in an unfolded state is illustrated. In the state 1101, the electronic device 101 may display a list of applications together with a navigation bar 620 in the second area 532 different from the first area 531. According to an embodiment, the electronic device 101 may receive an input indicating that a plurality of applications are executed based on the list displayed through the second area 532.

In the state 1101 of FIG. 11, the electronic device 101 may identify gestures included in the list of the second area 532 and dragging each of visual objects (e.g., a '2' icon and a '4' icon) corresponding to different applications along the paths 1111 and 1112. The gestures may be performed substantially simultaneously by a user. According to an embodiment, based on the gestures, the electronic device 101 may identify an input indicating that screens based on the execution of each of a second application (e.g., an application corresponding to '2' icon) and a third application (e.g., an application corresponding to '4' icon) corresponding to the visual objects are added to the first area 531, in the first area 531. Referring to FIG. 11, in response to the input, the electronic device 101 may enter a state 1102 from the state 1101.

In the state 1102 of FIG. 11, according to an embodiment, the electronic device 101 may display the second screen 1122 based on the execution of the second application selected by the input, and the third screen 1123 based on the execution of the third application selected by the input, together with the first screen 1121 of the first application displayed in the first area 531 in the state 1101. In the state 1102, the electronic device 101 may provide a user experience related to multitasking of the first applications to the third application, based on the first screen 1121 to the third screen 1123 displayed through the first area 531.

As described above, the electronic device 101 according to an embodiment may change at least one application executed through the first area 531, based on a gesture related to a list of applications in the second area 532. The electronic device 101 may visualize the list by adding one or more visual objects different from the navigation bar 620 in the second area 532. By using the visualized list, the electronic device 101 may receive an input for executing and/or controlling the application based on the first area 531.

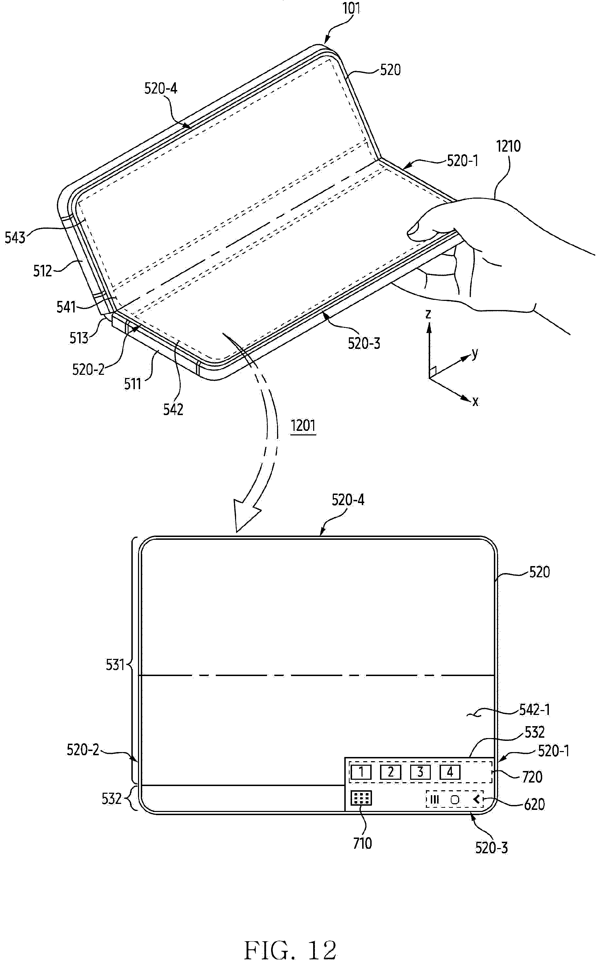

Although an embodiment in which the second area 532 is formed along a specific edge of the flexible display 520 has been described, the embodiment is not limited thereto. Hereinafter, an exemplary operation in which the electronic device 101 displays the second area 532 by partially utilizing one edge of the flexible display 520 according to an embodiment will be described with reference to FIG. 12.

FIG. 12 illustrates an example of an operation performed by an electronic device based on a location of a grip on a housing of the electronic device, according to an embodiment. An electronic device 101 of FIG. 12 may be an example of the electronic device 101 of FIGS. 5A to 5C. For example, the electronic device 101 and a flexible display 520 of FIGS. 5A to 5C may include each of the electronic device 101 and the flexible display 520 of FIG. 12. Hereinafter, an operation performed by the electronic device 101 based on a user's grip in a sub-unfolded state including a state 502 of FIG. 5B will be described.

According to an embodiment, the electronic device 101 may include a grip sensor for detecting a grip on a housing (e.g., at least one of a first housing 511, a folding housing 513, or a second housing 512). The grip sensor may be an example of a sensor 580 of FIG. 5A. Based on the grip sensor, the electronic device 101 may obtain information related to contact between the housing and an external object. The information may include a location of a portion of the housing in contact with the external object. According to an embodiment, the electronic device 101 may adjust the location of a second area 532 including a list of applications in the display area of the flexible display 520 based on the location identified from the information. For example, the electronic device 101 may change the location of the second area 532 so that the second area 532 in the display area includes one edge adjacent to the location among the corners of the display area.

Referring to FIG. 12, an exemplary state 1201 in which the user of the electronic device 101 grips a portion adjacent to a first corner of the electronic device 101 formed by the first edge 520-1 and the third edge 520-3 by using a hand 1210 is illustrated. In the state 1201, according to an embodiment, the electronic device 101 may detect the grip on the portion adjacent to the first corner based on the grip sensor. In response to detecting the grip, the electronic device 101 may form the second area 532 in the portion adjacent to the corner formed by the first edge 520-1 and the third edge 520-3, in the display area of the flexible display 520. Referring to FIG. 12, in the second area 532, the electronic device 101 may intensively dispose a plurality of visual objects included in the second area 532 to the corner formed by the first edge 520-1 and the third edge 520-3 by disposing a list 720 of applications and the navigation bar 620 based on distinct rows.

In an embodiment in which the second area 532 is formed based on the distinct rows in the display area of the flexible display 520, the electronic device 101 may adjust the transparency (or alpha value) of at least one of the second area 532 and/or the distinct rows. Based on the adjusted transparency, the electronic device 101 may display the second area 532 as an overlap on the first area 531.

Although the operation of the electronic device 101 based on the exemplary state 1201 that detects the grip on the portion adjacent to the corner formed by the first edge 520-1 and the third edge 520-3 has been described, the embodiment is not limited thereto. According to an embodiment, the electronic device 101 may form a second area 532 in the portion of the display area adjacent to the other corner based on detecting a grip on another portion adjacent to another corner (e.g., a corner formed by a second edge 520-2 and the third edge 520-3) different from the corner. Since the second area 532 is moved based on the portion that the grip is detected, the electronic device 101 may make it easier for the user to control the second area 532 based on one hand (e.g., the hand 1210).

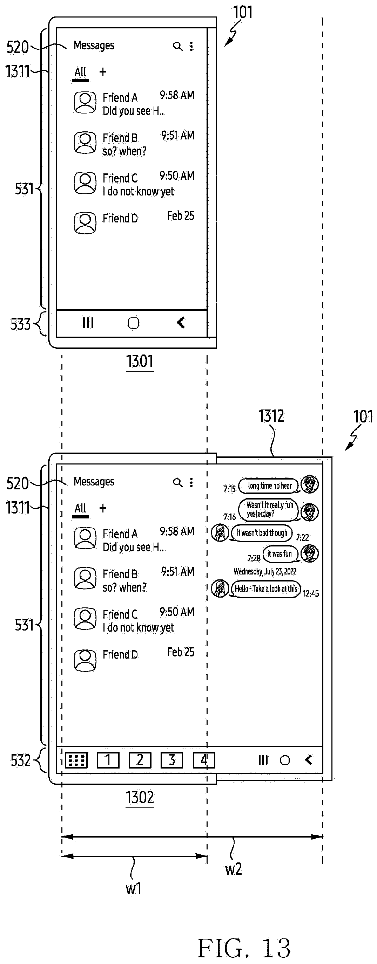

Although an embodiment of the electronic device 101 based on the foldable first housing 511, the second housing 512, and the folding housing 513 has been described, the embodiment is not limited thereto. Hereinafter, an example of the structure of the electronic device 101 including the deformable flexible display 520 will be described with reference to FIG. 13.

FIG. 13 illustrates an example of an operation performed by an electronic device 101 based on a display area that is enlarged and/or reduced by deformation of a flexible display 520, according to an embodiment. The electronic device 101 of FIG. 13 may be an example of the electronic device 101 of FIGS. 5A to 5C. For example, the electronic device 101 and a flexible display 520 of FIGS. 5A to 5C may include each of the electronic device 101 and the flexible display 520 of FIG. 13.

According to an embodiment, the electronic device 101 may include a first housing 1311, and a second housing 1312 slidably coupled to the first housing 1311. The electronic device 101 may include the flexible display 520 inserted into the first housing 1311 or pulled out of the first housing 1311, based on the movement of the second housing 1312 with respect to the first housing 1311. The display area of the flexible display 520 may be formed in a portion of the flexible display 520 that is exposed to the outside by insertion and/or extratction of the first housing 1311. According to an embodiment, the electronic device 101 may include hardware (e.g., an actuator) for controlling movement of the second housing 1312 with respect to the first housing 1311.

Referring to FIG. 13, according to an embodiment, different states 1301 and 1302 distinguished by a form of the electronic device 101 are illustrated. The state 1301 may be included in a state (e.g., a roll-in state and/or a rolled state) in which a preset portion of the flexible display 520 is inserted into the first housing 1311. The state 1302 may be included in a state (e.g., a roll-out state, and/or an unrolled state) in which the preset portion of the flexible display 520 is pulled out of the first housing 1311.

According to an embodiment, the electronic device 101 may determine whether to display a second area 532 that is different from the first area 531 and includes a list of applications based on a size of the display area of the flexible display 520 in a state of displaying a screen based on the execution of at least one application through the first area 531. For example, in the state 1301 in which the preset portion of the flexible display 520 is inserted into the first housing 1311, the size of the display area may be reduced to less than a preset size for displaying the second area 532 due to the insertion of the preset portion. In the state 1301, the electronic device 101 may refrain from displaying the second area 532 including the list of the applications. In the state 1301, the electronic device 101 may display a third area 533 including a navigation bar (e.g., a navigation bar 620 of FIG. 6A) together with the first area 531.

Referring to FIG. 13, as a preset portion of the flexible display 520 is pulled out of the first housing 1311, in the state 1302 where the size of the display area exceeds the preset size, according to an embodiment, the electronic device 101 may display the second area 532 including the list of the applications together with the first area 531. Through the list of the applications displayed in the second area 532, the electronic device 101 may support the above-described function with reference to FIGS. 5 to 12.

As described above, the electronic device 101 according to an embodiment may selectively display the list of the applications in the second area 532 and/or the second area 532 according to the size of the display area. The electronic device 101 may identify whether to display the second area 532 based on the size of the display area, an application executed based on the first area 531, or other condition. The other condition may include, for example, whether a stylus (or digitizer) in contact with the flexible display 520 of the electronic device 101 has been identified. For example, based on identifying the stylus approaching the flexible display 520, the electronic device 101 may at least temporarily stop displaying the second area 532. The electronic device 101 may enhance a user experience related to multitasking by using the second area 532 further including the list of the applications as well as the navigation bar.

Hereinafter, one or more operations performed by the electronic device 101 according to an embodiment will be described based on exemplary flowcharts with reference to FIGS. 14 to 16.

FIG. 14 illustrates an example of an operation of an electronic device according to an embodiment. The electronic device of FIG. 14 may include the electronic device 101 of FIGS. 1 to 13. For example, at least one of the operations of FIG. 14 may be performed by the electronic device 101 of FIGS. 5A to 5C and/or a processor 120 of FIG. 5A.

Referring to FIG. 14, in operation 1410, according to an embodiment, the electronic device may identify an input indicating that the first application is executed in a launcher screen. The launcher screen may include a launcher screen 610 of FIG. 6A. The input may be identified based on a gesture of touching and/or clicking a visual object such as an icon included in the launcher screen.

Referring to FIG. 14, in operation 1420, according to an embodiment, an electronic device may identify information on a display and/or a first application. The display may include a display 560 of FIG. 5. The information may include whether to display a list of applications together with a navigation bar (e.g., a navigation bar 620 of FIG. 6A).

Referring to FIG. 14, in operation 1430, according to an embodiment the electronic device may identify whether to display the list of one or more applications. For example, whether to display the list may be identified, based on whether the first application limits the display of the navigation bar. For example, the electronic device may identify whether to display the list based on the size of the display area of the display. In case that the display of the navigation bar is limited by the first application selected by an input of the operation 1410, or the size of the display area of the display is less than or equal to a preset size, the electronic device may refrain from displaying the list.

In case that it is determined not to display the list of the one or more applications (1430-no), in operation 1440, the electronic device according to an embodiment may display a first screen based on execution of the first application in the display area of the display. The size of the first screen may correspond to the size of the display area. For example, the electronic device may display the first screen corresponding to the first application based on the entire display area. A state 503 of FIG. 5C and/or a state 1301 of FIG. 13 may include a state where the electronic device displays the first screen based on the operation 1440.

In case that it is determined to display the list of the one or more applications (1430-yes), in operation 1450, the electronic device according to an embodiment may identify the list of the one or more applications based on information on the first application. For example, the electronic device may identify the list including another application interworking with the first application. For example, the electronic device may identify the list, based on information on the display of the operation 1420.

Referring to FIG. 14, in operation 1460, according to an embodiment, the electronic device may display the first screen based on the execution of the first application in the first area of the display area of the display, and may display the list of the one or more applications in a second area different from the first area. The first area and the second area may correspond to a first area 531 and a second area 532 of FIG. 5A. A state 501 of FIG. 5A, a state 602 of FIG. 6A, and/or a state 1302 of FIG. 13 may include a state after the electronic device divides the first area and the second area, based on the operation 1460.

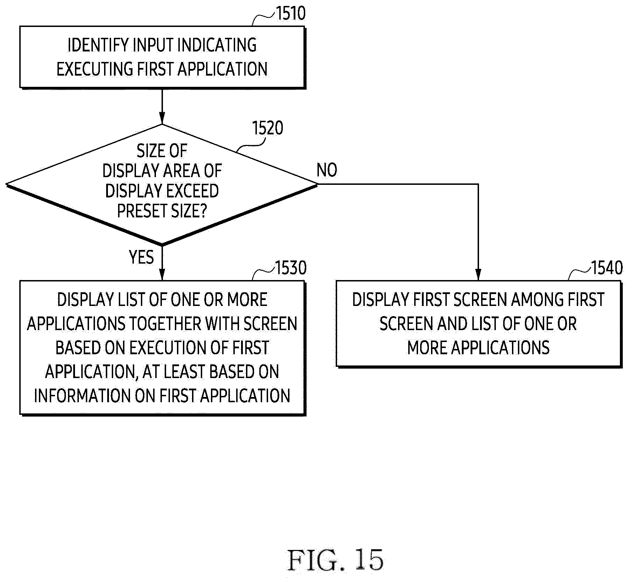

FIG. 15 illustrates an example of an operation of an electronic device according to an embodiment. The electronic device of FIG. 15 may include the electronic devices of FIGS. 1 to 14. For example, at least one of the operations of FIG. 15 may be performed by an electronic device 101 of FIGS. 5A to 5C and/or a processor 120 of FIG. 5A. At least one of the operations of FIG. 15 may be related to at least one of the operations of FIG. 14.

Referring to FIG. 15, in operation 1510, according to an embodiment, the electronic device may identify an input indicating that a first application is executed. For example, the electronic device may perform the operation 1510 similar to operation 1410 of FIG. 14.

Referring to FIG. 15, in operation 1520, according to an embodiment, the electronic device may identify whether a size of a display area of a display exceeds a preset size. The electronic device may perform the operation 1520 based on the input of the operation 1510. The preset size may be a predetermined size to display a list of applications based on division of the display area.

In response to identifying the size of the display area exceeding the preset size (1520-yes), in operation 1530, according to an embodiment, the electronic device may display a list of one or more applications together with a screen based on execution of the first application, at least based on information on the first application. The electronic device may perform the operation 1530 similar to operations 1450 and 1460 of FIG. 14. The list of the one or more applications may be related to at least one of the first application selected by the input of operation 1510 or the form of the display.

In response to identifying that the size of the display area is less than or equal to the preset size (1520-no), in operation 1540, according to an embodiment, the electronic device may display a first screen among a first screen and the list of the one or more applications. Based on the operation 1540, the electronic device may refrain from displaying the list of the one or more applications. For example, the electronic device may perform the operation 1540, similar to operation 1440 of FIG. 14.

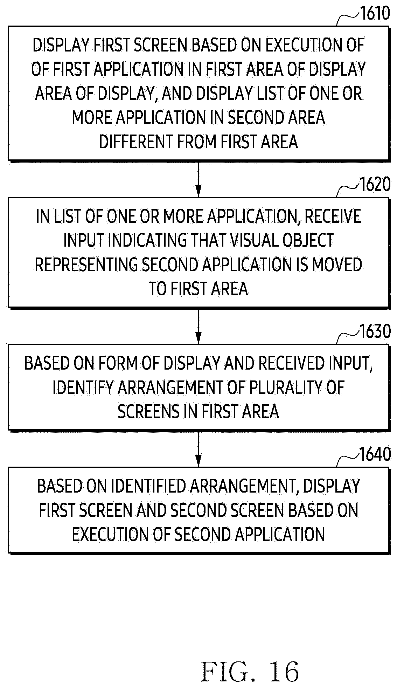

FIG. 16 illustrates an example of an operation of an electronic device according to an embodiment. The electronic device of FIG. 16 may include the electronic devices of FIGS. 1 to 15. For example, at least one of operations of FIG. 16 may be performed by an electronic device 101 of FIGS. 5A to 5C and/or a processor 120 of FIG. 5A. At least one of the operations of FIG. 16 may be related to at least one of the operations of FIGS. 14 to 15.

Referring to FIG. 16, in operation 1610, according to an embodiment, the electronic device may display a first screen based on execution of a first application in a first area of a display area of a display, and may display a list of one or more applications in a second area different from the first area. States 501 and 502 of FIGS. 5A to 5B may include a state where the electronic device displays the first screen and the list of the applications based on the operation 1610.

Referring to FIG. 16, in operation 1620, according to an embodiment, the electronic device may receive an input indicating that a visual object representing the second application is moved to the first area in the list of the one or more applications. The input may include a gesture dragged along a path 1040 of FIG. 10B.

Referring to FIG. 16, in operation 1630, according to an embodiment, the electronic device may identify an arrangement of a plurality of screens in the first area based on a form of the display and the received input. As in the state 1001 of FIG. 10A, in case that a state of the electronic device is included in an unfolded state, the electronic device may receive the input for selecting the arrangement based on portions 531-1, 531-2, 531-3, 531-4, and 531-5 formed in a first area 531. As in state 1004 of FIG. 10B, in case that the state of the electronic device is included in a state having a partially bent flexible display such as a sub-unfolded state, the electronic device may receive an input for selecting the arrangement, based on a portion having a form of a flat surface in the flexible display. The input for selecting the arrangement may include an input of the operation 1620.

Referring to FIG. 16, in operation 1640, according to an embodiment, the electronic device may display the first screen and a second screen based on execution of the second application based on the arrangement identified based on the operation 1630. The electronic device may display the first screen and the second screen substantially simultaneously in the first area of the operation 1610, based on the arrangement of the operation 1630. States 1002 and 1003 of FIG. 10A and a state 1102 of FIG. 11 may include a state of displaying the plurality of screens based on the operation 1640.

As described above, according to an embodiment, the electronic device may divide the display area into different areas based on a size of the display area of the display. The first area among the areas may be used to display one or more screens provided from the one or more applications executed by the electronic device. Among the areas, the second area different from the first area may be used to display at least one visual object for controlling the one or more screens displayed by the first area. The electronic device may display the list of the one or more applications among a plurality of applications installed in the electronic device, based on the one or more applications executed by the electronic device and/or the form of the electronic device, in the second area.

A method for displaying the list of the applications related to the specific application while displaying a screen based on execution of a specific application in the display of the electronic device may be required.

As described above, according to an embodiment, an electronic device (e.g., an electronic device 101 of FIGS. 5A to 5C), may comprise a first housing (e.g., a first housing 511 of FIGS. 5A to 5C) including a first surface and a second surface faced away from the first surface, a second housing (e.g., a second housing 512 of FIGS. 5A to 5C) including a third surface and a fourth surface faced away from the third surface, a folding housing (e.g., a folding housing 513 of FIGS. 5A to 5C) pivotably connecting a side surface of the first housing and a side surface of the second housing facing the side surface of the first housing by a folding axis, a flexible display (e.g., the flexible display 520 of FIGS. 5A to 5C) disposed on the first surface and the third surface across the folding housing, a cover display (e.g., a cover display 550 of FIGS. 5A to 5C) disposed on the second surface of the first housing, and a processor. The processor may be configured to display, in a first state (e.g., a state 501 of FIG. 5A) displaying a screen based on execution of a first application in a first area (e.g., a first area 531 of FIGS. 5A to 5C) of a displaying area of the flexible display, a list (e.g., a list 720 of FIGS. 7A to 7B) of applications for selecting at least one application executed based on the first area, wherein the list is displayed in a second area (e.g., a second area 532 of FIGS. 5A to 5C) different from the first area. The processor may be configured to display, in a second state (e.g., a state 503 of FIG. 5C) executing the first application based on a displaying area of the cover display, a screen based on execution of the first application in the displaying area of the cover display independent from displaying the list of the applications. Advantageously, the electronic device may selectively display the screen having e.g., either a second area including a list of applications or a third area excluding the list of applications, based on the form or the size of the display that is activated. For example, when the electronic device is in unfolded state (e.g., a first state or a state 501 of Fig. 5A or a state 602 of Fig. 6A or a state 1302 of Fig. 13), the screen may display a list of applications which may be accommodated in the large display area of the flexible display. When the electronic device is in a folded state (e.g., a second state or a state 503 of Fig. 5C or a state 1301 of Fig. 13), only a limited display area such as display area of the cover display may activated, and thus the screen may exclude the list of applications. Thus, by selectively displaying the list of applications on the screen based on the form or the size of the display which is activated, the overall user experience may be enhanced. In addition, when the list of applications is displayed, it enables the user to quickly perform the execution of any one of the applications included in the list, thereby improving the turn-around time for execution of the application.

According to an embodiment, the electronic device may divide the display into the first area that displays a screen based on the execution of a specific application, and the second area displaying a list of one or more applications, and may control the screen displayed in the first area based on an input related to the second area. For example, the processor may be configured to display, in response to an input indicating execution of the first application different from a second application for displaying visual objects respectively represent the applications based on the first area in the first state, the list of the applications in the second area. Advantageously, by selectively displaying the list of applications on the screen based on the form or the size of the display which is activated, the overall user experience may be enhanced. In addition, the list of applications displayed on the screen may also enable quick execution of an application included in the list, thereby improving the turn-around-time for execution of the application.

For example, the electronic device may further comprise a memory for storing a plurality of applications including the first application. The processor may be configured to identify, by selecting at least one of the plurality of applications stored in the memory based on the first application generating a screen to be displayed in the first area in the first state, the list of the applications to be displayed in the second area. Advantageously, the user may identify the list of applications based on a selection of a specific application so as to obtain a user-specific list of applications being displayed in the second area, thereby, enhancing the user experience.

For example, the processor may be configured to display, in the second area including an edge of the displaying area of the flexible display, the list of the applications based on at least one visual object arranged along a direction of the edge. Advantageously, the list of application, including visual objects, may be displayed along a direction of the edge for better visibility to the user.

For example, the processor may be configured to display, in the first state displaying the first area among the first area and the second area based on execution of the first application, the second area based on identifying an external object dragged toward the displaying area of the flexible display from the edge. Advantageously, a user specific customizable second area that may include the list of applications may be formed.

For example, the processor may be configured to display, in the second area in the first state, a navigation bar including preset visual objects for controlling at least one of the screen displayed in the first area or execution of the first application. The processor may be configured to display, in a portion different from a portion where the preset visual objects are displayed in the navigation bar and in the second area, the list of the applications. Advantageously, a customizable second area may be formed that includes the list of applications and a navigation bar, thereby enhancing a user experience related to multi-tasking

For example, the processor may be configured to select, among the flexible display and the cover display based on an angle between the first housing the folding axis and the second housing, a display where the screen based on execution of the first application is displayed. Advantageously, based on the intermediate folding position of the device, an appropriate display is selected for the purpose of selectively displaying the second area. For example, when the flexible display having a larger display area is selected based on the intermediate folding position of the electronic device or the posture of the electronic device, the second area may be displayed including the list of applications. When the cover display having a limited display area or a smaller display area than the flexible display is selected based on the intermediate folding position of the electronic device or the posture of the electronic device, the second area may exclude the list of applications and may only display necessary visual objects such as a navigation bar. Thus, the electronic device may selectively display the list of applications based on the activated display e.g., the flexible display or the cover display, for better visibility to the user and enhanced user experience.

For example, the processor may be configured to, in the first state, display, among different portions of the display area of the flexible display distinguished by the folding housing and an angle between the first housing the folding axis and the second housing which is included in angle range different from a straight angle, the second area in an edge of the first portion among edges of displaying area of the flexible display based on identifying a first portion having a direction associated with a direction of an acceleration of gravity. Advantageously, based on the intermediate folding position of the electronic device (e.g., a posture of the device) and a direction of gravity acceleration, an appropriate edge is selected for better visibility of the user. In addition, the selected edge may display the second area including e.g., the list of applications and/or the navigation bar for enhanced user experience.

For example, the processor may be configured to identify, in the list of the applications included in the second area, an input indicating drag of an icon representing the second application toward the first area in the first portion. For example, the processor may be configured to adjust, based on a location of the icon in the first portion dragged by the input, arrangement of the screen and another screen based on execution of the second application. Advantageously, a user-specific customizable second area may be obtained that includes the function of adding, removing or adjusting a specific application from the first area based on user's desire or need, thereby providing an enhance user experience.

For example, the processor may be configured to move, to a location adjacent to the second area in the first portion, at least one visual object displayed in a third portion on the folding housing in the displaying area of the flexible display. Advantageously, the visual objects present in a portion on the folding housing e.g., a portion of the display that is bent and could be seen with great difficult or could not possibility receive an input, may be moved to a portion of the display having better visibility, thereby enhancing the user experience.

As described above, according to an embodiment, a method of an electronic device may comprise displaying, in a first area of a displaying area of a flexible display of the electronic device, a first screen based on a first application executed by a processor of the electronic device. The method may comprise displaying, in a second area different from the first area including a first portion of the flexible display bent by a folding housing of the electronic device, a list of applications executable based on the first area. The method may comprise receiving, based on a gesture performed in a second portion of the flexible display which is different from the first portion and display the second area, an input indicating selecting at least one second application different from the first application in the list of the applications. The method may comprise displaying, with the first screen in the first area, based on layout indicated by the input, at least one second screen based on execution of the at least one second application.

For example, the displaying the list of the applications may comprise displaying, based on a state of the flexible display bent by the folding housing, a list of the applications selected among a plurality of applications stored in the electronic device.

For example, the receiving the input may comprise identifying the input based on a trajectory of an external object dragged from the second area to the first area. The receiving the input may comprise identifying, based on a terminal point of the trajectory in the first area, the layout indicated by the input.

For example, the displaying the list of the applications may comprise displaying, among edges of the second portion of the flexible display, icons representing the applications included in the list along an edge parallelly separated from a folding axis of the folding housing.

For example, the displaying the list of the applications may comprise displaying, based on whether a size of the displaying area of the flexible display exceeds a preset size, a list of the applications.

For example, the displaying the at least one second screen may comprise identifying, based on a parameter identified based on execution of the first application, whether to display the second area with the first screen.

As described above, according to an embodiment, an electronic device (e.g., an electronic device 101 of FIGS. 5A to 5C), may comprise a first housing (e.g., a first housing 511 of FIGS. 5A to 5C) including a first surface and a second surface faced away from the first surface, a second housing (e.g., a second housing 512 of FIGS. 5A to 5C), including a third surface and a fourth surface faced away from the third surface, a folding housing (e.g., a folding housing 513 of FIGS. 5A to 5C) pivotably connecting a side surface of the first housing and a side surface of the second housing facing the side surface of the first housing by a folding axis, a flexible display (e.g., a flexible display 520 of FIGS. 5A to 5C), disposed on the first surface and the third surface across the folding housing, and a processor (e.g., a processor 120 of FIGS. 5A to 5C). The processor may be configured to display, in a first area (e.g., a first area 531 of FIGS. 5A to 5C) of a displaying area of the flexible display, a first screen based on a first application executed by a processor. The processor may be configured to display, in a second area (e.g., a second area 532 of FIGS. 5A to 5C) different from the first area including a first portion of the flexible display bent by the folding housing, a list (e.g., a list 720 of FIGS. 7A to 7B) of applications executable based on the first area. The processor may be configured to receive, based on a gesture performed in a second portion of the flexible display which is different from the first portion and display the second area, an input indicating selecting at least one second application different from the first application in the list of the applications. The processor may be configured to display, with the first screen in the first area, based on layout indicated by the input, at least one second screen based on execution of the at least one second application.

For example, the processor may be configured to display, based on a state of the flexible display bent by the folding housing, a list of the applications selected among the plurality of applications.

For example, the processor may be configured to identify the input based on a trajectory of an external object dragged from the second area to the first area. The processor may be configured to identify, based on a terminal point of the trajectory in the first area, the layout indicated by the input.

For example, the processor may be configured to display, among edges of the second portion of the flexible display, icons representing the applications included in the list along an edge parallelly separated from a folding axis of the folding housing.

For example, the processor may be configured to display, based on whether a size of the displaying area of the flexible display exceeds a preset size, a list of the applications.

As described above, according to an embodiment, a method of an electronic device, may comprise displaying, in a first state displaying a screen based on execution of a first application in a first area of a displaying area of a flexible display of the electronic device, a list of applications for selecting at least one application executed based on the first area, wherein the list is displayed in a second area different from the first area. The method may comprise displaying, in a second state executing the first application based on a displaying area of a cover display, wherein a size of a displaying area of the cover display is smaller than a size of a displaying area of a flexible display, a screen based on execution of the first application in the displaying area of the cover display independent from displaying the list of the applications. Advantageously, the electronic device may selectively display the screen having e.g., either a second area including a list of applications or a third area excluding the list of applications, based on the form or the size of the display that is activated. For example, when the electronic device is in unfolded state (e.g., a first state or a state 501 of Fig. 5A or a state 602 of Fig. 6A or a state 1302 of Fig. 13), the screen may display a list of applications which may be accommodated in the large display area of the flexible display. When the electronic device is in a folded state (e.g., a second state or a state 503 of Fig. 5C or a state 1301 of Fig. 13), only a limited display area such as display area of the cover display may activated, and thus the screen may exclude the list of applications. Thus, by selectively displaying the list of applications on the screen based on the form or the size of the display which is activated, the overall user experience may be enhanced.

For example, the displaying the list of the applications may comprise displaying, in response to an input indicating execution of the first application different from a second application for displaying visual objects respectively represent the applications based on the first area in the first state, the list of the applications in the second area. Advantageously, by selectively displaying the list of applications on the screen based on the form or the size of the display which is activated, the overall user experience may be enhanced.

For example, the displaying the list of the applications may comprise identifying, by selecting at least one of the plurality of applications stored in a memory based on the first application generating a screen to be displayed in the first area in the first state, the list of the applications to be displayed in the second area. Advantageously, the user may identify the list of applications based on a selection of a specific application so as to obtain a user-specific list of applications being displayed in the second area, thereby, enhancing the user experience.

For example, the displaying the list of the applications may comprise displaying, in the second area including an edge of the displaying area of the flexible display, the list of the applications based on at least one visual object arranged along a direction of the edge. Advantageously, the list of application, including visual objects, may be displayed along a direction of the edge for better visibility to the user.

For example, the displaying the list of the applications may comprise displaying, in the first state displaying the first area among the first area and the second area based on execution of the first application, the second area based on identifying an external object dragged toward the displaying area of the flexible display from the edge. Advantageously, a user specific customizable second area that may include the list of applications may be formed.

As described above, according to an embodiment, an electronic device may comprise a first housing including a first surface and a second surface faced away from the first surface. The electronic device may comprise a second housing including a third surface and a fourth surface faced away from the third surface. The electronic device may comprise a folding housing pivotably connecting a side surface of the first housing and a side surface of the second housing facing the side surface of the first housing by a folding axis. The electronic device may comprise a first display disposed on the first surface and the third surface across the folding housing. The electronic device may comprise a second display disposed on the second surface of the first housing. The electronic device may comprise a processor. The processor may be configured to control, in a state where the first display is occluded by the first housing and the second housing, the second display based on execution of the application. The processor may be configured to refrain from controlling, in response to an input indicating switching the state of the first display to another state different from the state, based on rotation of the folding axis in the state, the second display, and activate the first display. The processor may be configured to control, based on execution of the application, a first area of a displaying area of the activated first display. The processor may be configured to display, in a second area different from the first area based on a type of the application, one or more executable objects for independently controlling the first area from the application.

For example, the type of the application may comprise a first type for classifying a launcher application, and a second type for classifying another application, which is different from the launcher application, of which displaying a list of one or more applications in the second area is allowed.

According to an embodiment, an electronic device may comprise a touch display, a processor and a memory for storing instructions. The instructions may be configured to, when executed by the processor, cause the electronic device to display a home screen including a main area for displaying icons and/or widgets and an icon tray area for displaying first icons corresponding to designated applications. The icon tray area may be displayed between the main area. The navigation bar may be displayed at a bottom area of the touch display. The navigation bar may include one or more visual objects including a home button. The instructions may be configured to, when executed by the processor, cause the electronic device to display, in response to a touch input corresponding to one of the icons displayed on the home screen, an execution screen of a software application corresponding to the touch input. The instructions may be configured to, when executed by the processor, cause the electronic device to display, in response to changing from displaying of the home screen to displaying the execution screen of the software application, in the bottom area of the touch display together with the navigation bar, second icons corresponding to the designated applications. The size of each of the second icons may be smaller than a size of each of the first icons.

For example, the electronic device may further comprise a housing including a first housing part and a second housing part rotatably coupled to the first housing part based on a folding axis, and a cover display disposed on a rear surface of the first housing part opposite to the first front surface. The display may be a flexible display that forms a first front surface of the first housing part and a second front surface of the second housing part. A portion of the flexible display may be configured to rotate another portion of the flexible display when the second housing part is rotated with respect to the first housing part. The bottom area may, in an unfolded state in which a first direction of the first front surface corresponds to a second direction of the second front surface, perpendicular to the folding axis.

For example, the instructions may be configured to, when executed by the at least one processor, cause the electronic device to display, in response to a folded state in which the first direction is opposite to the second direction, that is switched from another state displaying the second screen and the navigation bar in the flexible display, a third screen based on the executed software application, and display the navigation bar at the bottom area of the cover display with the preset visual objects without the second icons.

For example, the instructions may be configured to, when executed by the at least one processor, cause the electronic device to display, in the bottom area of the touch display together with the navigation bar and the second icons, a third icon corresponding to another software application which was executed by the at least one processor before the touch input.

For example, the instructions may be configured to, when executed by the at least one processor, cause the electronic device to display, in response to a drag input moving one of the second icons displayed in the bottom area to the execution screen, another execution screen of another software application corresponding to the drag input together with the execution screen.

For example, the instructions may be configured to, when executed by the at least one processor, cause the electronic device to display a third icon for providing a combination of a plurality of execution screens based on multi-tasking in the bottom area together with the navigation bar.

For example, the one or more visual objects included in the navigation bar may include a back button and an application list button.

According to an embodiment, a method of an electronic device including a touch display may comprise displaying a home screen including a main area for displaying icons and/or widgets and an icon tray area for displaying first icons corresponding to designated applications. The icon tray area may be displayed between the main area and a navigation bar displayed at a bottom area of the touch display. The navigation bar may include one or more visual objects including a home button. The method may comprise displaying, in response to a touch input corresponding to one of the icons displayed on the home screen, an execution screen of a software application corresponding to the touch input. The method may comprise displaying, in response to changing from displaying of the home screen to displaying the execution screen of the software application, in the bottom area of the touch display together with the navigation bar, second icons corresponding to the designated applications. A size of each of the second icons may be smaller than a size of each of the first icons.

For example, the displaying the execution screen may comprise displaying the execution screen in the display which is a flexible display that forms a first front surface of a first housing part and a second front surface of a second housing part. The second housing part may be rotatably coupled to the first housing part based on a folding axis. A portion of the flexible display may be configured to rotate another portion of the flexible display when the second housing part is rotated with respect to the first housing part. The displaying the second screen may comprise displaying the second icons in the bottom area which is, in a unfolded state in which a first direction of the first front surface corresponds to a second direction of the second front surface, perpendicular to the folding axis.

For example, the method may comprise displaying, in response to a folded state in which the first direction is opposite to the second direction, that is switched from another state displaying the second screen and the navigation bar in the flexible display, a third screen based on the executed software application, and display the navigation bar at the bottom area of a cover display with the preset visual objects without the second icons. The cover display may be positioned on a rear surface of the first housing part opposite to the first front surface.

For example, the displaying, in the bottom area of the touch display together with the navigation bar and the second icons, the home screen may comprise displaying a third icon corresponding to another software application which was executed by at least one processor of the electronic device before the touch input.

For example, the displaying the execution screen may comprise displaying, in response to a drag input moving one of the second icons displayed in the bottom area to the execution screen, another execution screen of another software application corresponding to the drag input together with the execution screen.

For example, the displaying the second icons may comprise displaying a third icon for providing a combination of a plurality of execution screens based on multi-tasking in the bottom area together with the navigation bar.

For example, the one or more visual objects included in the navigation bar may include a back button and an application list button.

According to an embodiment, a non-transitory computer readable storage medium may comprise instructions. The instructions may be configured to, when executed by a processor of an electronic device including a touch display, cause the electronic device to perform the method described above.

The present disclosure discloses an electronic device that is configured to selectively display a screen having e.g., either a second area - including a list of applications - or another area such as a third area - excluding the list of applications - based on a form or a size of the display that is activated. Thus, the electronic device of the present disclosure selectively displays the list of applications in the second area or another additional area according to the size of the activated display e.g., whether the flexible display is activated or the cover display is activated, thereby providing an enhanced user experience related to multitasking. In addition, when the list of applications is displayed on the screen, it enables the user to quickly perform the execution of any one of the applications included in the list, thereby improving the turn-around time for execution of the application.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit (ALU), digital signal processor, microcomputers, field programmable gate array (FPGA), PLU (programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magneto-optical media such as floppy disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. An electronic device (101), comprising:
a touch display;
a processor; and
a memory for storing instructions that, when executed by the processor, cause the electronic device (101) to:
display a home screen including a main area for displaying icons and/or widgets and an icon tray area (615) for displaying first icons corresponding to designated applications, wherein the icon tray area (615) is displayed between the main area and a navigation bar (620) displayed at a bottom area of the touch display, wherein the navigation bar (620) includes one or more visual objects including a home button;
in response to a touch input corresponding to one of the icons displayed on the home screen, display an execution screen of a software application corresponding to the touch input; and
in response to changing from displaying of the home screen to displaying the execution screen of the software application, display, in the bottom area of the touch display together with the navigation bar (620), second icons corresponding to the designated applications, wherein a size of each of the second icons are smaller than a size of each of the first icons.

2. The electronic device (101) of Claim 1, wherein the electronic device (101) further comprising:
a housing including a first housing part and a second housing part rotatably coupled to the first housing part based on a folding axis, and
a cover display (550) disposed on a rear surface of the first housing part opposite to the first front surface,
wherein the display is a flexible display (520) that forms a first front surface of the first housing part and a second front surface of the second housing part, wherein a portion of the flexible display configured to rotate another portion of the flexible display when the second housing part is rotated with respect to the first housing part,
wherein the bottom area is, in an unfolded state in which a first direction of the first front surface corresponds to a second direction of the second front surface, perpendicular to the folding axis.

3. The electronic device (101) of Claim 2, wherein the instructions are, when executed by the at least one processor, cause the electronic device (101) to:
In response to a folded state in which the first direction is opposite to the second direction, that is switched from another state displaying the second screen and the navigation bar (620) in the flexible display (520), display a third screen based on the executed software application, and display the navigation bar (620) at the bottom area of the cover display (550) with the preset visual objects without the second icons.

4. The electronic device (101) of Claim 1, wherein the instructions are, when executed by the at least one processor, cause the electronic device (101) to:
display, in the bottom area of the touch display together with the navigation bar(620) and the second icons, a third icon corresponding to another software application which was executed by the at least one processor before the touch input.

5. The electronic device (101) of claim 1, wherein the instructions are, when executed by the at least one processor, cause the electronic device (101) to:
display, in response to a drag input moving one of the second icons displayed in the bottom area to the execution screen, another execution screen of another software application corresponding to the drag input together with the execution screen.

6. The electronic device (101) of claim 1, wherein the instructions are, when executed by the at least one processor, cause the electronic device (101) to:
display a third icon for providing a combination of a plurality of execution screens based on multi-tasking in the bottom area together with the navigation bar (620).

7. The electronic device (101) of claim 1, wherein the one or more visual objects included in the navigation bar (620) includes a back button and an application list button.

8. A method of an electronic device including a touch display, comprising:
displaying a home screen including a main area for displaying icons and/or widgets and an icon tray area (615) for displaying first icons corresponding to designated applications, wherein the icon tray area (615) is displayed between the main area and a navigation bar (620) displayed at a bottom area of the touch display, wherein the navigation bar (620) includes one or more visual objects including a home button;
in response to a touch input corresponding to one of the icons displayed on the home screen, displaying an execution screen of a software application corresponding to the touch input; and
in response to changing from displaying of the home screen to displaying the execution screen of the software application, displaying, in the bottom area of the touch display together with the navigation bar (620), second icons corresponding to the designated applications, wherein a size of each of the second icons are smaller than a size of each of the first icons.

9. The method of Claim 8, wherein the displaying the execution screen comprises:
displaying the execution screen in the display which is a flexible display (520) that forms a first front surface of a first housing part and a second front surface of a second housing part, wherein the second housing part rotatably coupled to the first housing part based on a folding axis, and wherein a portion of the flexible display configured to rotate another portion of the flexible display when the second housing part is rotated with respect to the first housing part,
wherein the displaying the second screen comprises:
displaying the second icons in the bottom area which is, in a unfolded state in which a first direction of the first front surface corresponds to a second direction of the second front surface, perpendicular to the folding axis.

10. The method of Claim 9, further comprising:
in response to a folded state in which the first direction is opposite to the second direction, that is switched from another state displaying the second screen and the navigation bar (620) in the flexible display (520), displaying a third screen based on the executed software application, and display the navigation bar (620) at the bottom area of a cover display (550) with the preset visual objects without the second icons,
wherein the cover display (550) is positioned on a rear surface of the first housing part opposite to the first front surface.

11. The method of Claim 8, wherein the displaying the home screen comprises:
displaying, in the bottom area of the touch display together with the navigation bar(620) and the second icons, a third icon corresponding to another software application which was executed by at least one processor of the electronic device before the touch input.

12. The method of claim 8, wherein the displaying the execution screen comprises:
displaying, in response to a drag input moving one of the second icons displayed in the bottom area to the execution screen, another execution screen of another software application corresponding to the drag input together with the execution screen.

13. The method of claim 8, wherein the displaying the second icons comprises:
displaying a third icon for providing a combination of a plurality of execution screens based on multi-tasking in the bottom area together with the navigation bar (620).

14. The method of claim 8, wherein the one or more visual objects included in the navigation bar (620) includes a back button and an application list button.

15. A non-transitory computer readable storage medium comprising instructions, wherein the instructions are configured to, when executed by a processor of an electronic device including a touch display, cause the electronic device to perform the method of one of claim 8 to claim 14.
